(19) Europäisches Patentamt / European Patent Office / Office européen des brevets

(11) **EP 3 131 669 B1**

(12) **EUROPÄISCHE PATENTSCHRIFT**

(45) Veröffentlichungstag und Bekanntmachung des Hinweises auf die Patenterteilung:
**13.06.2018** **Patentblatt 2018/24**

(21) Anmeldenummer: **15710116.3**

(22) Anmeldetag: **19.02.2015**

(51) Int Cl.:
**B01J 20/20** *(2006.01)*      **B01J 20/28** *(2006.01)*
**C02F 1/28** *(2006.01)*       **B01D 39/20** *(2006.01)*
**B01D 53/02** *(2006.01)*      **B01D 53/04** *(2006.01)*
**B01D 53/26** *(2006.01)*

(86) Internationale Anmeldenummer:
**PCT/EP2015/053495**

(87) Internationale Veröffentlichungsnummer:
**WO 2015/158450 (22.10.2015 Gazette 2015/42)**

(54) **VERWENDUNG EINES PARTIKULÄREN ADSORPTIONSMATERIALS ZUR VERLÄNGERUNG DER EINSATZ- UND/ODER STANDZEIT EINER ADSORPTIVEN FILTEREINHEIT**

USE OF A PARTICULATE ADSORPTION MATERIAL FOR THE EXTENSION OF USEFUL CYCLE TIMES AND/OR SERVICE LIFE OF AN ADSORPTIVE FILTER UNIT

UTILISATION D'UN MATÉRIAU D'ADSORPTION POUR LA PROLONGATION DU TEMPS D'UTILISATION ET/OU DURÉE D'EMPLOI D'UNE UNITÉ DE FILTRATION ADSORBANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **17.04.2014   DE 102014005645**
**27.05.2014   DE 102014107489**

(43) Veröffentlichungstag der Anmeldung:
**22.02.2017   Patentblatt 2017/08**

(73) Patentinhaber: **Blücher GmbH**
**40699 Erkrath (DE)**

(72) Erfinder:
• **FICHTNER, Sven**
**14727 Premnitz (DE)**
• **SCHÖNFELD, Raik**
**40699 Erkrath (DE)**
• **GIEBELHAUSEN, Jann-Michael**
**14712 Rathenow (DE)**
• **SCHRAGE, Christian**
**40699 Erkrath (DE)**
• **MODROW, Antje**
**40699 Erkrath (DE)**

(74) Vertreter: **Von Rohr Patentanwälte Partnerschaft mbB**
**Rüttenscheider Straße 62**
**45130 Essen (DE)**

(56) Entgegenhaltungen:
**DE-A1-102007 024 385     DE-U1-202013 003 676**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft das technische Gebiet adsorptiver Filter bzw. Filtereinheiten, welche beispielsweise zur Behandlung bzw. Aufreinigung von Fluiden bzw. fluiden Medien (d.h. von gasförmigen oder flüssigen Medien), wie insbesondere Wasser, eingesetzt werden können, beispielsweise im Rahmen der Behandlung oder Aufbereitung von Abwasser oder Trinkwasser.

Insbesondere betrifft die vorliegende Offenbarung im Speziellen Verfahren zur Bereitstellung einer adsorptiven Filtereinheit mit verlängerter Einsatz- bzw. Standzeit, insbesondere mit verbesserter bzw. erhöhter Beständigkeit und Resistenz gegenüber biologischer Kontamination bzw. gegenüber biologischem Befall, wobei die Filtereinheit nach der Erfindung mit mindestens einem speziellen partikulären Adsorptionsmaterial in Form einer kugelförmigen Aktivkohle ausgerüstet bzw. ausgestattet wird.

Darüber hinaus betrifft die vorliegende Offenbarung eine adsorptive Filtereinheit als solche mit verlängerter Einsatz- bzw. Standzeit, insbesondere mit verbesserter bzw. erhöhter Beständigkeit und Resistenz gegenüber biologischer Kontamination bzw. gegenüber biologischem Befall.

Die vorliegende Offenbarung betrifft weiterhin Verfahren zur Verlängerung der Einsatz- bzw. Standzeit der adsorptiven Filtereinheit nach der Erfindung sowie Verfahren zur Behandlung bzw. Aufreinigung eines fluiden Mediums, vorzugsweise Wasser (wie Abwasser oder aber Trinkwasser). Die vorliegende Erfindung Verwendungen eines speziellen partikulären Adsorptionsmaterials in Form einer kugelförmigen Aktivkohle zu Zwecken der Verlängerung der Einsatz- bzw. Standzeit einer adsorptiven Filtereinheit.

Schließlich betrifft die vorliegende Offenbarung zudem Verwendungen der adsorptiven Filtereinheit nach der Erfindung insbesondere zur Behandlung und Aufreinigung eines fluiden Mediums, vorzugsweise Wasser, oder für die Entfernung von Schadstoffen oder für die Gasreinigung bzw. -aufbereitung oder zur Aufbereitung bzw. Bereitstellung von Reinraumatmosphären.

Zu Zwecken der Behandlung bzw. Aufreinigung von fluiden Medien kommen im Stand der Technik verschiedene Filtersysteme bzw. -prinzipien zum Einsatz. Die in Rede stehenden Filtersysteme werden dabei im Allgemeinen zur zielgerichteten Veränderung der Zusammensetzung des aufzureinigenden fluiden Mediums eingesetzt, wobei vorrangig unerwünschte (Schad-)Stoffe aus dem Medium möglichst selektiv entfernt werden sollen. Im Allgemeinen liegen in einem flüssigen Medium, wie Wasser, die zu entfernenden (Schad-)Stoffe in fester bzw. dispergierter Form oder in gelöster Form vor, und in einem gasförmigen Medium, wie Luft, liegen die zu entfernenden (Schad-)Stoffe beispielsweise in Form eines Aerosols bzw. als Staub oder aber als Gas vor.

Im Stand der Technik werden in diesem Zusammenhang mechanische bzw. physikalisch basierte Filter vorrangig zur Entfernung partikulärer Substanzen bzw. von Feststoffen aus einem aufzureinigenden Fluid eingesetzt. Im Allgemeinen gehen mechanische Filtersysteme jedoch oftmals mit dem Nachteil einher, dass die Einsatz- bzw. Standzeiten relativ klein sind und zudem im Wesentlichen nur eine unselektive Entfernung erfolgen kann, wobei mit den in Rede stehenden Filtersystemen grundsätzlich keine gelösten (Schad-)Stoffe im Fall von Flüssigkeiten, wie Wasser, bzw. keine gasförmigen (Schad-)Stoffe im Fall von Gasen bzw. Luft aus dem aufzureinigenden Medium entfernt werden können.

Zur Entfernung von insbesondere gelösten bzw. dispergierten (Schad-)Stoffen kommen dagegen maßgeblich auch physikochemisch bzw. chemisch basierte Filtersysteme zum Einsatz, beispielweise auf Basis von Membranfiltern (z.B. Umkehrosmose) oder chemischen Filtern unter Verwendung von Chemikalien zur Initiierung von Fällungsreaktionen oder dergleichen. Chemische Behandlungsverfahren sind jedoch oftmals apparativ aufwendig, und mit dem Einsatz spezieller Fällungschemikalien geht oftmals ein gewisses Gefahrenpotential für die Umwelt einher.

Bei der Aufreinigung von Flüssigkeiten, wie Wasser, kommen beispielsweise im Rahmen der Trinkwasseraufbereitung auch sogenannte Membranfiltersysteme bzw. Membranverfahren, wie Nanofiltration bzw. Umkehrosmose, zum Einsatz, wobei diesbezüglich semipermeable Membranen eingesetzt werden können. Auf diese Weise können auch gelöste (Schad-)Stoffe bzw. Ionen aus dem aufzureinigenden Medium entfernt werden. Nachteilig hierbei ist jedoch die mitunter geringe Effizienz derartiger Filtersysteme, einhergehend mit einer hohen Verlustrate an aufzureinigendem Medium. Zudem besteht bei Membranfiltersystemen oftmals das Problem einer nachhaltigen Verkeimung, was zu einer Begrenzung der Einsatz- bzw. Standzeit und zu einer Verminderung der Filtereffizienz führt. Nachteilig ist zudem die mitunter geringe Selektivität der zugrundeliegenden Membranen. Zudem sind resultierende Rückstände oftmals toxisch stark belastet, so dass deren Entsorgung ein weiteres Problem darstellt.

Zudem kann gemäß den Verfahren des Standes der Technik eine Ozon- bzw. UV-Behandlung erfolgen, insbesondere um unerwünschte (Schad-)Stoffe photochemisch abzubauen. Ein weiterer Ansatz zur Reduzierung von unerwünschten (Schad-)Stoffen insbesondere aus aufzureinigendem Wasser bzw. Rohwasser besteht im Stand der Technik somit darin, die zu entfernenden Verbindungen durch Oxidationsprozesse chemisch zu zersetzen. Nachteilig sind in diesem Zusammenhang jedoch die oftmals damit in Verbindung stehenden hohen Energiekosten, die aufwendige Entfernung von Rest-Ozon im behandelten Wasser sowie die unerwünschte Bildung toxischer Metabolite bzw. Abbauprodukte infolge der Zersetzung der in Rede stehenden (Schad-)Stoffe.

Darüber hinaus können im Allgemeinen bei der Aufreinigung bzw. Behandlung von flüssigen oder gasförmigen Medien auch sorptive, insbesondere adsorptive Filtersysteme eingesetzt werden, anhand derer oftmals eine effiziente und hochselektive Aufreinigung des zugrundeliegenden Mediums ermöglicht wird, insbesondere auch im Hinblick auf sogenannte Mikroverunreinigungen, wie nachfolgend angeführt.

Denn die in dem aufzubereitenden Medium, insbesondere Wasser (beispielsweise im Rahmen der Abwasserbehandlung bzw. der Bereitstellung von Trinkwasser bzw. von Reinstwasser), unter Einsatz adsorptiver Filtersysteme zu entfernenden, insbesondere in dem Medium gelösten (Schad-)Stoffe als solche anbelangt, so handelt es sich hierbei im Allgemeinen um sogenannte Mikroverunreinigungen, welche synonym auch als Spurenstoffe bzw. *Micropollutants* bezeichnet werden. Hierzu zählen insbesondere neben Industriechemikalien und Flammschutzmitteln auch pharmazeutische Wirkstoffe bzw. Humanpharmaka, wie Analgetika, Hormonwirkstoffe oder dergleichen, welche unverändert oder nach chemischem Umbau im menschlichen Organismus als Konjugate bzw. Metabolite ausgeschieden werden und in der Folge beispielsweise in das kommunale Abwasser gelangen. Weiterhin anzuführen sind bestimmte Industriechemikalien, wie Weichmacher, insbesondere Bisphenol-A, Röntgenkontrastmittel, Tenside, Pestizide oder dergleichen. Derartige Substanzen weisen bereits in geringen Mengen ein hohes Wirkpotential bzw. ein hohes toxisches Potential sowie eine geringe Bioverträglichkeit auf. Als weitere Beispiele können sogenannte *Dissolved Organic Compounds* bzw. *Dissolved Organic Carbons* (DOC) angeführt werden, welche gleichermaßen als Verunreinigung im Wasser vorliegen können.

Aufgrund des hohen toxischen Potentials, der Persistenz und des hohen Bioakkumulationspotentials der vorgenannten Schadstoffe bzw. Spurenstoffe sowie der zunehmenden Verwendung derartiger Substanzen besteht ein hoher Bedarf, einerseits mit derartigen Substanzen kontaminiertes Abwasser aus Privathaushalten, aus der Industrie sowie aus medizinischen Einrichtungen und andererseits mit derartigen Schadstoffen bereits kontaminiertes Trinkwasser in wirksamer Weise unter Einsatz dauerhafter Filtersysteme zur Verringerung der entsprechenden Schadstoffe zu behandeln, beispielsweise in Bezug auf bereits belastetes Trinkwasser bei der Behandlung im Wasserwerk vor Einspeisung in das Trinkwassernetz.

Wie zuvor angeführt, ist ein Vorgehen zur Verringerung des Gehalts an Mikroverunreinigungen in fluiden Medien, insbesondere Wasser, darin zu sehen, die Verunreinigungen sorptiv, insbesondere adsorptiv, aus dem Wasser zu entfernen, wobei hierzu adsorptive Filtermaterialien eingesetzt werden. In diesem Zusammenhang können beispielsweise Aktivkohle, Zeolithe, Molekularsiebe, Metalloxid- bzw. Metallpartikel sowie Ionenaustauscherharze oder dergleichen eingesetzt werden. Derartige Materialien führen im Allgemeinen zu einer guten Entfernung von Schadstoffen. Insbesondere werden in diesem Zusammenhang auch herkömmliche Aktivkohlen zur Verringerung des Gehalts an Schadstoffen bzw. Mikroverunreinigungen eingesetzt.

Grundsätzlich besteht beim Einsatz von adsorptiven Materialien in Filtersystemen zur Aufreinigung von fluiden Medien, wie Wasser oder Luft, jedoch die Gefahr einer Verkeimung bzw. einer biologischen Kontamination bzw. eines biologischen Befalls des Adsorptionsmittels, insbesondere auch für den Fall, wonach das Adsorptionsmaterial für einen längeren Zeitraum in Kontakt mit Feuchtigkeit steht. Denn aufgrund der porösen Struktur mit einer relativ stark strukturierten Oberfläche stellen die vorgenannten Adsorptionsmaterialien grundsätzlich einen bevorzugten Besiedlungsort für Mikroorganismen bzw. biologische Keime dar, insbesondere sofern ein entsprechend feuchtes Milieu vorliegt, was beispielsweise für wässrige Medien aber auch für feuchte Luftströme (beispielsweise ausgeatmete Luft) der Fall ist.

Eine übermäßige Besiedlung insbesondere der Oberfläche des Adsorptionsmaterials mit Mikroorganismen bzw. biologischen Keimen geht dabei mit dem zentralen Nachteil einher, dass aufgrund der Ausbildung einer biologischen Schicht auf der Oberfläche des Adsorptionsmaterials nicht zuletzt der Zugang für das aufzureinigende Medium zu dem Porensystem des Adsorptionsmaterials verringert bzw. blockiert wird, so dass das Porensystem der Aktivkohle für zu adsorbierende Schadstoffe bzw. Mikroverunreinigungen nicht mehr bzw. nur noch im begrenzten Maß zugänglich ist. Dies führt zu einer nachhaltigen Verringerung der Aufreinigungs- bzw. Filtereffizienz des zugrundeliegenden Filtersystems, einhergehend mit einer signifikanten Verringerung der Einsatz- bzw. Standzeiten solcher Systeme.

Mit einer übermäßigen Verkeimung des Adsorptionsmaterials geht auch die Gefahr einher, dass sich im Einsatzbzw. Anwendungsfall des Filters Mikroorganismen bzw. Keime von der Oberfläche des Adsorptionsmittels lösen und in das aufzureinigende bzw. das bereits aufgereinigte Medium abgegeben werden, so dass es zu einer unerwünschten Kontamination des Mediums bzw. Filtrats kommen kann, was nicht zuletzt im Hinblick auf die Aufbereitung von Trinkwasser bzw. die Bereitstellung von Reinstwasser problematisch ist.

Auch von daher ist bei Filtersystemen des Standes der Technik mitunter ein häufiger Austausch des Adsorptionsmaterials bzw. der Einsatz entsprechend neuer Filtersysteme erforderlich, was jedoch verfahrenstechnisch ungünstig und zudem kostenintensiv ist.

In diesem Zusammenhang betrifft die DE 36 24 975 C2 einen Schüttschichtfilter auf Basis eines mit körnigem Schüttgut gefüllten (Filter-)Schachts, dessen Seitenwände für das zu filternde Medium durchlässig sind, wobei in diesem Zusammenhang Aktivkohle als solche als Schüttgut eingesetzt werden kann. Gezielte Maßnahmen zur Verringerung der Verkeimung des Filtermaterials sind nicht vorgesehen, so dass das Filtersystem mitunter nicht optimale Einsatz- bzw. Standzeiten aufweist.

Weiterhin betrifft die DE 1 642 396 A1 ein Verfahren zur Behandlung von Abwasser, wobei suspendierte Feststoffe zunächst abgetrennt werden und wobei das gesiebte Rohwasser mit einem Flockungsmittel behandelt und das überstehende Wasser von der gebildeten Ausflockung abgetrennt und durch Aktivkohlebetten geleitet wird. Dabei werden herkömmliche Aktivkohlen eingesetzt, welche jedoch eine mitunter übermäßige Tendenz zur Verkeimung aufweisen.

Darüber hinaus betrifft die WO 2007/092914 A1 ein Abwasserbehandlungssystem, welches ein Filterelement bzw. -gefäß mit einem natürlichen bzw. biologisch basierten Filtermaterial und mit einem weiteren Filtermaterial in Form von herkömmlicher Aktivkohle sowie entsprechende Einrichtungen zum Einführen und Ausführen von Wasser aufweist. Aufgrund der Verwendung herkömmlicher Aktivkohle in Kombination mit einem biologisch basierten Filtermaterial resultiert eine mitunter übermäßige Gefahr der Verkeimung der eingesetzten Filtermaterialien, was der Effizienz des Filtersystems abträglich ist.

Die Verkeimung bzw. biologische Kontamination eines Adsorptionsmaterials insbesondere in Form von Aktivkohle ist auch bei entsprechenden Filteranwendungen zur Aufreinigung von Gasphasen problematisch, insbesondere wenn die aufzureinigenden Gas- bzw. Luftströme einen hohen Feuchtigkeitsgehalt aufweisen, da hierdurch eine Kondensatbildung auf bzw. in dem Adsorptionsmaterial erfolgen kann, was wiederum zu optimalen Wachstumsbedingungen für Keime bzw. Mikroorganismen führt. In diesem Zusammenhang ist insbesondere die Verwendung von Aktivkohle als Adsorptionsmaterial in Atemschutzfiltersystemen oder aber in Dunstabzugshauben oder dergleichen zu nennen.

In diesem Zusammenhang betrifft die DE 38 13 564 A1 und die zu derselben Patentfamilie gehörende EP 0 338 551 A2 eine Aktivkohlefilterschicht für ABC-Schutzmasken oder dergleichen, welche ein hochdurchlässiges, im Wesentlichen formstabiles dreidimensionales Trägergerüst umfasst, an welchem eine Schicht von körnigen Aktivkohleteilchen fixiert ist, wobei es sich bei dem Trägergerüst um ein Geflecht aus Drähten, Monofilamenten oder Stegen bzw. um eine schaumbasierte Struktur handeln kann. In diesem Zusammenhang werden Aktivkohlepartikel als solche eingesetzt, so dass es unter ungünstigen Bedingungen mitunter zur Verkeimung kommen kann, zumal das in Rede stehende Filtersystem in ABC-Schutzmasken eingesetzt werden soll und damit auch in Kontakt mit angefeuchteter Luft (ausgeatmete Luft des Trägers) kommen kann.

Die DE 20 2013 003 676 U1 offenbart weiterhin eine Aufreinigungsanlage insbesondere für Trinkwasser, welche eine Filtereinheit mit einer speziellen Aktivkohle (PBSAC - polymer-based spherical activated carbon) aufweist. Insgesamt besteht im Stand der Technik somit ein großer Bedarf, adsorptive Filtersysteme bereitzustellen, welche im Rahmen ihres Einsatzes zur Aufreinigung bzw. zur Behandlung von fluiden Medien, wie Wasser bzw. Gas(-gemischen), eine verringerte Tendenz der Verkeimung bzw. biologischen Kontamination aufweisen.

Vor diesem Hintergrund liegt daher der vorliegenden Erfindung die Aufgabe zugrunde, ein effizientes Konzept zur Bereitstellung einer adsorptiven Filtereinheit mit verlängerter Einsatz- bzw. Standzeit, insbesondere mit verbesserter bzw. erhöhter Beständigkeit bzw. Resistenz gegenüber biologischer Kontamination bzw. biologischem Befall bereitzustellen, wobei die zuvor geschilderten Nachteile des Standes der Technik zumindest weitgehend vermieden oder aber wenigstens abgeschwächt werden sollen.

Insbesondere ist eine Aufgabe der vorliegenden Erfindung darin zu sehen, eine adsorptive Filtereinheit zur Verfügung zu stellen, wobei die so bereitgestellte adsorptive Filtereinheit über eine verbesserte Resistenz bzw. Beständigkeit gegenüber Verkeimung bzw. biologischem Befall insbesondere unter Einsatzbedingungen (d.h. im Anwendungszustand im Rahmen der Filtration von fluiden Medien) verfügen soll und wobei die erfindungsgemäß bereitgestellte adsorptive Filtereinheit gleichermaßen eine hohe Effizienz hinsichtlich der Entfernung bzw. Adsorption von toxischen Substanzen, insbesondere in Form von Mikroverunreinigungen oder dergleichen, aus einem aufzureinigenden Fluid aufweisen soll.

Gleichermaßen besteht eine wiederum weitere Aufgabe der vorliegenden Erfindung darin, entsprechende adsorptive Filtereinheiten bereitzustellen, welche insgesamt über eine verlängerte Einsatz- bzw. Standzeit verfügen und welche eine hohe Eignung für filtertechnische Anwendungen, beispielsweise im Rahmen der Wasseraufbereitung, aber auch im Hinblick auf die Aufarbeitung bzw. Behandlung von Luftströmen aufweisen.

Gegenstand der vorliegenden Erfindung ist die Verwendung eines partikulären Adsorptionsmaterials in Form einer kugelförmigen Aktivkohle zur Verlängerung der Einsatz- bzw. Standzeit einer adsorptiven Filtereinheit gemäß dem diesbezüglichen Verwendungsanspruch 1. Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder aber anderenfalls mit dem Fachmann auf diesem Gebiet an sich geläufigen Bestimmungs- bzw. Messmethoden ermittelt bzw. bestimmt werden können.

Im Übrigen gilt, dass bei sämtlichen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben.

Gegenstand der vorliegenden Erfindung ist somit eine Verwendung gemäß Anspruch 1. Eine grundlegende Idee der vorliegenden Erfindung ist somit darin zu sehen, im Rahmen der erfindungsgemäßen Verwendung der adsorptiven Filtereinheit mit verlängerter Einsatz- bzw. Standzeit ein sehr spezielles partikuläres Adsorptionsmaterial in Form einer kugelförmigen Aktivkohle einzusetzen, wobei die Aktivkohle zudem ein spezielles Gesamtporenvolumen mit definiertem Anteil an Mikro- bzw. Mesoporen aufweist und wobei die Aktivkohle definierte Oberflächeneigenschaften hinsichtlich ihrer Hydrophilie aufweist, bestimmt als Wasserdampfadsorptionsverhalten.

Was in diesem Zusammenhang die Bestimmung des Wasserdampfadsorptionsverhaltens anbelangt, so erfolgt diese im Rahmen der vorliegenden Erfindung auf Basis der DIN 66135-1, wobei als zugrundeliegendes Adsorptiv bzw. Adsorbat Wasser bzw. Wasserdampf eingesetzt wird. In diesem Zusammenhang erfolgt die Bestimmung des Wasserdampfadsorptionsverhaltens statisch-volumetrisch bei einer Temperatur von 25 °C (298 Kelvin). Die Bestimmung des dem Wasserstoffadsorptionsverhalten zugrundeliegenden druckabhängigen Volumen an adsorbiertem Wasser bzw. adsorbiertem Wasserdampf $V_{ads}$(STP) erfolgt dabei bei unterschiedlichen bzw. variablen Umgebungsdrücken $p/p_0$ im Bereich von 0,0 bis 1,0, wobei $p_0$ den Druck unter Standardbedingungen (1.013,25 hPa) darstellt. Dabei bezieht sich das erfindungsgemäß herangezogene Wasserdampfadsorptionsverhalten auf die Adsorptionsisotherme der zugrundeliegenden Aktivkohle.

Das Wasserdampfadsorptionsverhalten, wie zuvor spezifiziert, fungiert dabei als Maß für die Hydrophilie bzw. Hydrophobie der erfindungsgemäß eingesetzten Aktivkohle, und zwar dahingehend, dass aufgrund der zuvor angeführten Werteangaben erfindungsgemäß eine solche Aktivkohle eingesetzt wird, welche insgesamt weniger hydrophil ausgebildet ist und welche somit nach allgemeinem Sprachgebrauch als hydrophob bezeichnet werden kann.

Insbesondere sind die erfindungsgemäß eingesetzten Aktivkohlen derart ausgestaltet, dass diese relativ weniger hydrophil ausgebildet sind als beispielsweise kokosnussschalen- oder pechbasierte Aktivkohlen bzw. Splitterkohlen, welche im Vergleich zu der erfindungsgemäß eingesetzten Aktivkohle insgesamt hydrophiler bzw. weniger hydrophob sind.

In diesem Zusammenhang zeichnen sich die erfindungsgemäß eingesetzten Aktivkohlen insbesondere dadurch aus, dass eine signifikante Wasserdampfadsorption erst bei relativ hohen Partialdrücken $p/p_0$ erfolgt, da - ohne sich auf diese Theorie beschränken zu wollen - die erfindungsgemäßen Aktivkohlen aufgrund ihrer geringeren Hydrophilie eine weniger hohe Affinität zu polaren Wassermolekülen aufweisen. Im Vergleich zu den erfindungsgemäßen Aktivkohlen erfolgt bei vergleichsweise hydrophilen Aktivkohlen, wie den zuvor genannten Aktivkohlen bzw. Splitterkohlen insbesondere auf Basis von Kokosnussschalen bzw. Pech, eine signifikante Wasserdampfadsorption bereits bei niedrigeren Partialdrücken $p/p_0$, was erfindungsgemäß in Bezug auf die eingesetzte Aktivkohle gerade nicht der Fall ist, wie zuvor angeführt.

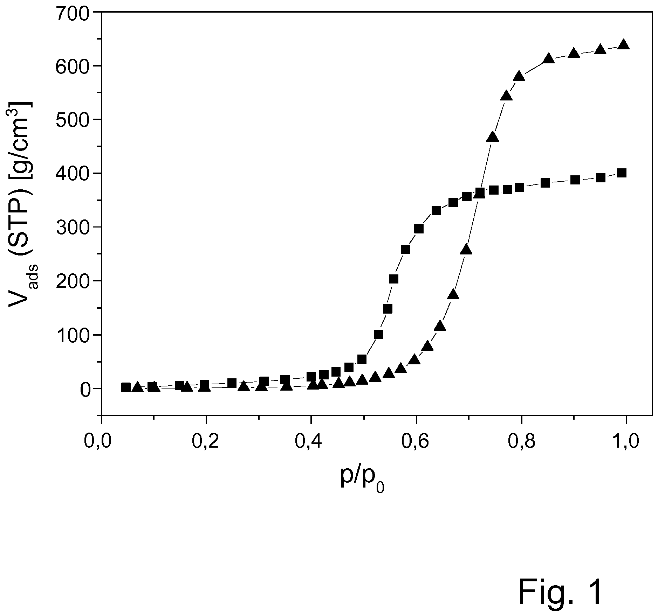

In diesem Zusammenhang kann auch auf die nachfolgend angeführte Fig. 1 verwiesen werden, welche das Wasserdampfadsorptionsverhalten einer erfindungsgemäß eingesetzten Aktivkohle im Vergleich zu einem anderen Aktivkohletyp, nämlich einer Splitterkohle auf Basis von Kokosnussschalen, zeigt.

Für weitere Informationen und Ausführungen zur Wasserdampfadsorption kann auch verwiesen werden auf die Dissertationsschrift von *M. Neitsch, "Wasserdampf- und n-Butanadsorption an Aktivkohle - Mechanismus, Gleichgewicht und Dynamik der 1-Komponenten- und der Coadsorption", Fakultät für Maschinenbau, Verfahrens- und Energietechnik, Technische Universität Bergakademie Freiberg.* Im Ergebnis wird im Rahmen der vorliegenden Erfindung somit eine sehr spezielle Aktivkohle eingesetzt, welche eine definierte Affinität zu Wasser aufweist, nämlich dahingehend, dass erfindungsgemäß insbesondere eine Aktivkohle geringer Hydrophilie bzw. eine hydrophobe Aktivkohle eingesetzt wird, wobei die Aktivkohle zudem ein definiertes Gesamtporenvolumen mit insgesamt hohem Mikro- bzw. Mesoporenanteil aufweist.

Denn die Anmelderin hat in völlig überraschender Weise gefunden, dass auf diese Art und Weise unter Einsatz- bzw. Anwendungsbedingungen in Filtrationsverfahren eine biologische Verkeimung bzw. eine biologische Kontamination bzw. ein Befall der Aktivkohle mit Mikroorganismen in effizienter Weise verringert bzw. verhindert werden kann. Dabei ist es zudem völlig überraschend, dass sich die erfindungsgemäßen Maßnahmen auf Basis der definierten Affinität gegenüber Wasser, des zuvor definierten Gesamtporenvolumens mit speziellem Anteil an Mikro- bzw. Mesoporen sowie der Verwendung von Aktivkohle in Kugelform über die Summe der Einzelmaßnahmen und somit in synergistischer Weise ergänzen, was auch durch die erfindungsgemäß angeführten Ausführungsbeispiele so belegt wird.

Insbesondere führt - gleichermaßen ohne sich auf diese Theorie beschränken zu wollen - auch das definierte Porenvolumen mit den definierten Porengrößen dazu, dass entsprechende Keime bzw. Mikroorganismen nicht bzw. nur in verringertem Maße in die Poren bzw. in das innere Porensystem eindringen können, was gleichermaßen den Befall bzw. die Verkeimung insgesamt vermindert.

Darüber hinaus hat die Anmelderin in völlig überraschender Weise gefunden, dass die erfindungsgemäße Verwendung eines sehr speziellen partikulären Adsorptionsmaterials in Form einer Aktivkohle dahingehend, dass erfindungsgemäß in zweckgerichteter Weise eine kugelförmige bzw. sphärische Aktivkohle eingesetzt wird, zu einer weiterführenden Verminderung der Verkeimung führt. Ohne sich auf diese Theorie festlegen zu wollen, führt die kugelförmige bzw. sphärische Formgebung der Aktivkohle dazu, dass im Einsatz- bzw. Anwendungsfall eine optimierte bzw. homogene Durchströmung des Filtermaterials in Form einer Vielzahl von Aktivkohlekügelchen mit dem aufzureinigenden fluiden Medium vorliegt, so dass der Anteil an Zonen verringerter Strömung bzw. sogenannte "tote" Zonen deutlich verringert sind, so dass auch hierdurch eine Anlagerung bzw. ein Bewuchs der Aktivkohle mit Mikroorganismen weiterführend unterbunden wird.

Ohne sich auf diese Theorie beschränken zu wollen, ist die Resistenz der erfindungsgemäß eingesetzten Aktivkohle gegenüber biologischen Keimen bzw. Mikroorganismen insofern erhöht, als sich die Keime nicht bzw. nur in geringem Maß auf der Aktivkohle ansiedeln können, so dass insgesamt ein verminderter (Oberflächen-)Bewuchs der Aktivkohle vorliegt, einhergehend mit einer verbesserten Zugänglichkeit des Porensystems für zu adsorbierende Subtanzen bzw. Schadstoffe. Aufgrund der speziellen Oberflächeneigenschaften sind die Wachstumsbedingungen für Keime bzw. Mikroorganismen auf der Aktivkohle nicht optimal, was im Ergebnis auch bei langen Einsatz- bzw. Standzeiten zu einem verminderten Bewuchs bzw. Befall führt.

Was die erfindungsgemäß verwendeten Begriffe "biologische Kontamination" bzw. "biologischer Befall" anbelangt, so sind diese sehr breit zu verstehen und beziehen sich insbesondere auf einen Bewuchs bzw. eine Besiedlung der als Filtermaterial eingesetzten Aktivkohle mit Keimen bzw. Mikroorganismen, und zwar insbesondere auf der Oberfläche der Aktivkohle sowie gegebenenfalls in dem insbesondere an der Oberfläche angrenzenden Porensystem der Aktivkohle. Bei den in Rede stehenden Keimen bzw. Mikroorganismen handelt es sich insbesondere um aquatische bzw. feuchtigkeitsaffine Keime bzw. Mikroorganismen. Insbesondere werden die in Rede stehenden Keime bzw. Mikroorganismen in nichtbeschränkender Weise durch ein- bzw. mehrzellige, insbesondere einzellige Keime bzw. Mikroorganismen gebildet, wie beispielsweise Algen, Bakterien, Pilze, wie Hefen, Protozoen oder dergleichen.

Was zudem den erfindungsgemäß verwendeten Begriff "kugelförmig", synonym auch als "sphärisch" bezeichnet, anbelangt, so ist dieser Begriff sehr breit zu verstehen und betrifft insbesondere eine zumindest im Wesentlichen ideale kugelförmige bzw. sphärische Form der Aktivkohle, aber auch solche Formgebungen bzw. körperliche Ausgestaltungen der eingesetzten Aktivkohle, welche geringfügig von der Kugelform abweichen, wie eine Ausbildung der Aktivkohle in Form eines (Rotations-)Ellipsoids oder dergleichen. Zudem umfasst der Begriff "kugelförmig" auch solche kugelförmige bzw. ellipsoidartige Formen der Aktivkohle, bei welchen die Aktivkohle im geringen Maße Aus- bzw. Einbuchtungen, Dellen, Vertiefungen oder dergleichen aufweisen kann, ohne dass jedoch die kugelförmige Formgebung als solche hierdurch maßgeblich verändert wird. Erfindungsgemäß wird somit im Speziellen auf den Einsatz einer kugelförmigen Aktivkohle bzw. einer Kugelkohle bzw. einer sphärischen Aktivkohle abgestellt.

Was die erfindungsgemäße Verwendung darüber hinaus anbelangt, so kann die Aktivkohle eine Hydrophilie, bestimmt als Wasserdampfadsorptionsverhalten, aufweisen derart, dass bei einem Partialdruck $p/p_0$ von 0,6 höchstens 25 %, insbesondere höchstens 20 %, vorzugsweise höchstens 10%, bevorzugt höchstens 5 %, der maximalen Wasserdampfadsorptionskapazität der Aktivkohle erschöpft bzw. genutzt ist. Insbesondere sollte bei einem Partialdruck $p/p_0$ von 0,6 höchstens 25 %, insbesondere höchstens 20 %, vorzugsweise höchstens 10 %, bevorzugt höchstens 5 %, der maximalen Wasserdampfsättigungsbeladung der Aktivkohle erreicht sein.

Weiterhin kann es gemäß einer erfindungsgemäß bevorzugten Ausführungsform vorgesehen sein, dass die Aktivkohle eine Hydrophilie, bestimmt als Wasserdampfadsorptionsverhalten, aufweist derart, dass 0,1 % bis 30 %, insbesondere 0,5 % bis 25 %, vorzugsweise 1 % bis 20 %, bevorzugt 1,5 % bis 15 %, besonders bevorzugt 2 % bis 10 %, der maximalen Wasserdampfadsorptionskapazität der Aktivkohle bei einem Partialdruck $p/p_0$ von 0,6 erschöpft und/oder genutzt ist. Insbesondere kann es erfindungsgemäß vorgesehen sein, dass 0,1 % bis 30 %, insbesondere 0,5 % bis 25 %, vorzugsweise 1 % bis 20 %, bevorzugt 1,5 % bis 15 %, besonders bevorzugt 2 % bis 10 %, der maximalen Wasserdampfsättigungsbeladung der Aktivkohle bei einem Partialdruck $p/p_0$ von 0,6 erreicht ist.

Gleichermaßen kann es vorgesehen sein, dass die Aktivkohle eine Hydrophilie, bestimmt als Wasserdampfadsorptionsverhalten, aufweist derart, dass bei einem Partialdruck $p/p_0$ von 0,6 die von der Aktivkohle adsorbierte Wasserdampfmenge (H$_2$O-Volumen) $V_{ads(H2O)}$, bezogen auf das Gewicht der Aktivkohle, höchstens 200 cm$^3$/g, insbesondere höchstens 175 cm$^3$/g, vorzugsweise höchstens 150 cm$^3$/g, bevorzugt höchstens 100 cm$^3$/g, besonders bevorzugt höchstens 75 cm$^3$/g, beträgt.

In diesem Zusammenhang kann die Aktivkohle erfindungsgemäß eine Hydrophilie, bestimmt als Wasserdampfadsorptionsverhalten, aufweisen derart, dass in einem Partialdruck $p/p_0$ von 0,6 die von der Aktivkohle adsorbierte Wasserdampfmenge (H$_2$O-Volumen) $V_{ads(H2O)}$, bezogen auf das Gewicht der Aktivkohle, im Bereich von 10 cm$^3$/g bis

200 cm$^3$/g, insbesondere 20 cm$^3$/g bis 175 cm$^3$/g, vorzugsweise 30 cm$^3$/g bis 150 cm$^3$/g, bevorzugt 40 cm$^3$/g bis 100 cm$^3$/g, besonders bevorzugt 50 cm$^3$/g bis 75 cm$^3$/g, liegt.

Zudem kann die Aktivkohle eine Hydrophilie, bestimmt als Wasserdampfadsorptionsverhalten, aufweisen derart, dass in einem Partialdruckbereich p/p$_0$ von 0,1 bis 0,6 höchstens 25 %, insbesondere höchstens 20 %, vorzugsweise höchstens 10 %, bevorzugt höchstens 5 %, der maximalen Wasserdampfadsorptionskapazität der Aktivkohle erschöpft und/oder genutzt ist. Insbesondere kann in einem Partialdruckbereich p/p$_0$ von 0,1 bis 0,6 höchstens 25 %, insbesondere höchstens 20 %, vorzugsweise höchstens 10 %, bevorzugt höchstens 5 %, der maximalen Wasserdampfsättigungsbeladung der Aktivkohle erreicht sein.

Weiterhin ist es erfindungsgemäß vorteilhaft, wenn die Aktivkohle eine Hydrophilie, bestimmt als Wasserdampfadsorptionsverhalten, aufweist derart, dass 0,05 % bis 30 %, insbesondere 0,1 % bis 25 %, vorzugsweise 0,5 % bis 20 %, bevorzugt 1 % bis 15 %, besonders bevorzugt 1 % bis 10 %, der maximalen Wasserdampfadsorptionskapazität der Aktivkohle in einem Partialdruckbereich p/p$_0$ von 0,1 bis 0,6 erschöpft und/oder genutzt ist. Insbesondere sollten 0,05 % bis 30 %, insbesondere 0,1 % bis 25 %, vorzugsweise 0,5 % bis 20 %, bevorzugt 1 % bis 15 %, besonders bevorzugt 1 % bis 10 %, der maximalen Wasserdampfsättigungsbeladung der Aktivkohle in einem Partialdruckbereich p/p$_0$ von 0,1 bis 0,6 erreicht sein.

Die vorstehend angeführten Werte des Wasserdampfadsorptionsverhaltens beziehen sich insbesondere auf die zugrundeliegende Wasserstoffadsorptionsisotherme der erfindungsgemäß eingesetzten Aktivkohle, wie zuvor angeführt.

Was die im Rahmen der vorliegenden Erfindung eingesetzte Aktivkohle weiterhin anbelangt, so hat die Anmelderin gleichermaßen in völlig überraschender Weise gefunden, dass auch die Oberflächenrauigkeit der eingesetzten Aktivkohle, bestimmt als fraktale Dimension der offenen Porosität, einen signifikanten Einfluss auf die Resistenz der Aktivkohle gegenüber einer unerwünschten Besiedlung mit Keimen bzw. Mikroorganismen hat. Was die fraktale Dimension der offenen Porosität als Maß für die Rauigkeit anbelangt, so ist per allgemeiner Definition ein Stoff umso rauer, desto näher der Wert der fraktalen Dimension an den Wert 3 herantritt. Entsprechend kleinere Werte bedeuten demnach eine geringere Oberflächenrauigkeit der Aktivkohle.

Ohne sich auf diese Theorie festlegen zu wollen, führt eine geringe Oberflächenrauigkeit zu einem verminderten Anhaftungsvermögen bzw. einer verringerten Adhäsion von Keimen bzw. Mikroorganismen in Bezug auf die zugrundeliegende Aktivkohle, so dass hierdurch der Bewuchs bzw. die Verkeimung weiterführend minimiert wird.

In diesem Zusammenhang hat es sich im Rahmen der vorliegenden Erfindung als besondere vorteilhaft erwiesen, wenn die Aktivkohle eine fraktale Dimension der offenen Porosität im Bereich von höchstens 2,9 (d.h. ≤ 2,9), insbesondere höchstens 2,89, vorzugsweise höchstens 2,85, bevorzugt höchstens 2,82, besonders bevorzugt höchstens 2,8, ganz besonders bevorzugt höchstens 2,75, weiter bevorzugt höchstens 2,7, aufweist. Insbesondere sollte die erfindungsgemäß eingesetzte Aktivkohle eine fraktale Dimension der offenen Porosität im Bereich von 2,2 bis 2,9, insbesondere 2,2 bis 2,89, vorzugsweise 2,25 bis 2,85, bevorzugt 2,3 bis 2,82, besonders bevorzugt 2,35 bis 2,8, ganz besonders bevorzugt 2,4 bis 2,75, weiter bevorzugt 2,45 bis 2,7, aufweisen.

Für weitergehende Einzelheiten zur Bestimmung der fraktalen Dimension der erfindungsgemäß eingesetzten Aktivkohle kann auf die Druckschriften DE 102 54 241 A1, WO 2004/046033 A1, EP 1 562 855 B1 sowie auf die zu derselben Patentfamilie gehörende US 2006/148645 A1 verwiesen werden, insbesondere auf das in den jeweiligen Druckschriften angeführte Ausführungsbeispiel 4. Wie zuvor angeführt, führen die vorgenannten fraktalen Dimensionen zu weiter verbesserten Eigenschaften bzw. zu einer verbesserten Resistenz gegenüber einem Bewuchs mit Keimen bzw. Mikroorganismen.

Die fraktale Dimension der erfindungsgemäß eingesetzten Aktivkohle kann insbesondere gemäß der Methode nach Frenkel-Halsey-Hill (FHH-Methode) bestimmt werden. Hierzu kann beispielsweise verwiesen werden auf P. Pfeiffer, Y.J. Wu, M.W. Cole and J. Krim, Phys. Rev. Lett., 62, 1997 (1989*)* und auf A.V. Neimark, Ads. Sci. Tech., 7, 210 (1991*)* sowie auf P. Pfeiffer, J. Kennter, and M.W. Cole, Fundamentals of Adsorption (Edited by A.B. Mersmann and S.E. Sholl), Engineering Foundation, New York, 689 (1991*)*.

Gemäß einer besonders bevorzugten Ausführungsform kann es zudem vorgesehen sein, dass die erfindungsgemäß eingesetzte Aktivkohle einen Aschegehalt von höchstens 1 Gew.-%, insbesondere höchstens 0,95 Gew.-%, vorzugsweise höchstens 0,9 Gew.-%, bevorzugt höchstens 0,8 Gew.-%, besonders bevorzugt höchstens 0,7 Gew.-%, ganz besonders bevorzugt höchstens 0,5 Gew.-%, weiter bevorzugt höchstens 0,3 Gew.-%, noch weiter bevorzugt höchstens 0,2 Gew.-%, bestimmt gemäß ASTM D2866-94/04 und bezogen auf die Aktivkohle, aufweist. Insbesondere sollte die Aktivkohle in diesem Zusammenhang einen Aschegehalt im Bereich von 0,005 Gew.-% bis 1 Gew.-%, insbesondere 0,01 Gew.-% bis 0,95 Gew.-%, vorzugsweise 0,02 Gew.-% bis 0,9 Gew.-%, bevorzugt 0,03 Gew.-% bis 0,8 Gew.-%, besonders bevorzugt 0,04 Gew.-% bis 0,7 Gew.-%, ganz besonders bevorzugt 0,06 Gew.-% bis 0,5 Gew.-%, weiter bevorzugt 0,08 Gew.-% bis 0,3 Gew.-%, noch weiter bevorzugt 0,1 Gew.-% bis 0,2 Gew.-%, bestimmt gemäß ASTM D2866-94/04 und bezogen auf die Aktivkohle, aufweisen.

Denn die Anmelderin hat in diesem Zusammenhang gleichermaßen völlig überraschend gefunden, dass ein verringerter Aschegehalt gleichermaßen den Bewuchs bzw. die Besiedlung der Aktivkohle mit Mikroorganismen weiterführend verringert. Ohne sich auf diese Theorie festlegen zu wollen, geht ein verringerter Aschegehalt der eingesetzten Aktivkohle auch mit einem geringeren Nährstoffangebot einher, was das Wachstum von Mikroorganismen bzw. Keimen verringert, insbesondere da diese keine optimalen Wachstumsbedingungen vorfinden. Der Aschegehalt geht - gleichermaßen ohne sich auf diese Theorie festlegen zu wollen - insbesondere auf solche biologisch-organische Komponenten zurück, welche von die Aktivkohle besiedelnden Mikroorganismen verstoffwechselt werden können.

Was die erfindungsgemäß eingesetzte Aktivkohle darüber hinaus anbelangt, so kann diese im Allgemeinen erhältlich sein durch Carbonisierung und nachfolgende Aktivierung eines synthetischen und/oder nicht naturstoffbasierten Ausgangsmaterials, insbesondere auf Basis organischer Polymere. Denn auf diese Weise können Aktivkohlen bereitgestellt werden, welche die erfindungsgemäß definierten Anforderungen erfüllen.

Im Rahmen der vorliegenden Erfindung hat es sich als besonders vorteilhaft erwiesen, wenn erfindungsgemäß eine Aktivkohle auf Basis eines sehr speziellen Ausgangsmaterials eingesetzt wird: So kann gemäß einer besonders bevorzugten Ausführungsform die erfindungsgemäß eingesetzte Aktivkohle aus einem Ausgangsmaterial auf Basis organischer Polymere, insbesondere auf Basis sulfonierter organischer Polymere vorzugsweise auf Basis von divinylbenzolvernetztem Polystyrol, bevorzugt auf Basis von Styrol/Divinylbenzol-Copolymeren, erhalten werden, insbesondere durch Carbonisierung und nachfolgende Aktivierung des Ausgangsmaterials.

Denn eine Aktivkohle, die auf Basis der zuvor angeführten Ausgangsmaterialien gewonnen wird, weist einerseits eine definierte Porosität, insbesondere auch im Hinblick auf die Porenverteilung in Bezug auf Mikro-, Meso- und Makroporen, sowie definierte Affinitätseigenschaften gegenüber Wasser gemäß den obigen Ausführungen auf. Zudem weist eine derartige Aktivkohle eine definierte Formgebung mit einer kugelförmigen Ausbildung der Aktivkohle auf. Weitere zentrale Vorteile einer derartigen Aktivkohle sind darin zu sehen, dass Aktivkohle auf Basis organischer Polymere, in besonderem Maße rieselfähig, abriebfest sowie staubfrei und hart ist, was für die erfindungsgemäße Konzeption auch mit dem Einsatz in bzw. als Wasserfilter von besonderem Vorteil ist.

Was die erfindungsgemäß in besonders bevorzugter Weise eingesetzte Aktivkohle, welche durch Carbonisierung und nachfolgende Aktivierung eines Ausgangsmaterials auf Basis organischer Polymere erhalten wird, anbelangt, so kann es vorgesehen sein, dass der Gehalt an Divinylbenzol in dem Ausgangsmaterial im Bereich von 1 Gew.-% bis 20 Gew.-%, insbesondere 1 Gew.-% bis 15 Gew.-%, vorzugsweise 1,5 Gew.-% bis 12,5 Gew.-%, bevorzugt 2 Gew.-% bis 10 Gew.-%, bezogen auf das Ausgangsmaterial, liegt.

Zudem kann es erfindungsgemäß in diesem Zusammenhang vorgesehen sein, dass das Ausgangsmaterial ein insbesondere sulfoniertes und/oder Sulfonsäuregruppen enthaltendes Ionenaustauscherharz, insbesondere vom Geltyp, ist.

Insbesondere kann es erfindungsgemäß vorgesehen sein, dass als Aktivkohle eine polymerbasierte sphärische Aktivkohle (PBSAC; *Polymer-based Spherical Activated Carbon*) eingesetzt wird. Insbesondere kann die Aktivkohle eine polymerbasierte sphärische Aktivkohle (PBSAC) sein.

Die eingesetzte Aktivkohle kann dabei grundsätzlich nach bekannten Verfahren des Standes der Technik erhalten werden: Insbesondere werden zu diesem Zweck kugelförmige sulfonierte organische Polymere, insbesondere auf Basis von divinylbenzolvernetztem Polystyrol, carbonisiert und anschließend zu der betreffenden Aktivkohle aktiviert, insbesondere wie zuvor angeführt. Für weitergehende diesbezügliche Einzelheiten kann beispielsweise auf die Druckschriften DE 43 28 219 A1, DE 43 04 026 A1, DE 196 00 237 A1 sowie EP 1 918 022 A1 bzw. auf die parallele, zu derselben Patentfamilie gehörende US 7,737,038 B2 verwiesen werden. Im Rahmen der vorliegenden Erfindung zum Einsatz kommende Aktivkohlen sind im Allgemeinen kommerziell erhältlich bzw. handelsüblich. Insbesondere können Aktivkohlen zum Einsatz kommen, welche beispielsweise von der Blücher GmbH, Erkrath, Deutschland, oder von der AdsorTech GmbH, Premnitz, Deutschland, vertrieben werden.

Was die im Rahmen der vorliegenden Erfindung verwendete bzw. eingesetzte Aktivkohle als solche anbelangt, so werden die vorliegend aufgeführten Parameterangaben bezüglich der zugrundeliegenden Aktivkohle mit genormten oder explizit angegebenen Bestimmungsverfahren oder mit dem Fachmann an sich geläufigen Bestimmungsmethoden bestimmt. Insbesondere die Parameterangabe betreffend die Charakterisierung der Porosität der Porengrößenverteilung und andere Adsorptionseigenschaften ergeben sich im Allgemeinen jeweils aus den entsprechenden Stickstoffsorptionsisothermen der betreffenden Aktivkohle bzw. der vermessenen Produkte. Zudem kann die Porenverteilung, insbesondere auch im Hinblick auf den Gehalt an Mikroporen in Bezug auf das Gesamtporenvolumen, auf Basis der DIN 66135-1 bestimmt werden.

Im Rahmen der vorliegenden Erfindung hat es sich zudem als vorteilhaft erwiesen, wenn die erfindungsgemäß eingesetzte Aktivkohle ein weiterführend spezialisiertes Gesamtporenvolumen nach Gurvich aufweist, wie im Folgenden angeführt.

So kann es vorgesehen sein, dass die Aktivkohle ein Gesamtporenvolumen, insbesondere ein Gesamtporenvolumen nach Gurvich, im Bereich von 0,3 cm$^3$/g bis 3,8 cm$^3$/g, insbesondere 0,4 cm$^3$/g bis 3,5 cm$^3$/g, vorzugsweise 0,5 cm$^3$/g bis 3 cm$^3$/g, besonders bevorzugt 0,6 cm$^3$/g bis 2,5 cm$^3$/g, ganz besonders bevorzugt 0,7 cm$^3$/g bis 2 cm$^3$/g, aufweist.

Was die Bestimmung des Gesamtporenvolumens nach Gurvich anbelangt, so handelt es sich um eine dem Fachmann auf diesem Gebiet an sich wohlbekannte Mess-/Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technology Series, Seiten 111 ff. Insbesondere kann das Porenvolumen der Aktivkohle auf Basis der Gurvich-Regel gemäß der Formel $V_P = W_a/\rho_l$ bestimmt werden, wobei $W_a$ die adsorbierte Menge eines zugrundeliegenden Adsorbats und $\rho_l$ die Dichte des eingesetzten Adsorbats darstellt (vgl. auch Formel (8.20) gemäß Seite 111, Kapitel 8.4.) von S. Lowell et al.).

Was die erfindungsgemäße Konzeption der Verringerung der Verkeimung der Aktivkohle bei deren Einsatz in der Aufbereitung bzw. Filterung eines fluiden Mediums weiterhin anbelangt, so spielt auch die Porenverteilung der erfindungsgemäß eingesetzten Aktivkohle eine große Rolle.

So kann es in diesem Zusammenhang vorgesehen sein, dass mindestens 65 %, insbesondere mindestens 70 %, vorzugsweise mindestens 75 %, bevorzugt mindestens 80 %, des Gesamtporenvolumens nach Gurvich der Aktivkohle durch Poren mit Porendurchmessern von höchstens 50 nm, insbesondere durch Mikro- und/oder Mesoporen, gebildet werden.

Insbesondere kann es erfindungsgemäß vorgesehen sein, dass 65 % bis 85 %, vorzugsweise 70 % bis 80 %, des des Gesamtporenvolumens nach Gurvich der Aktivkohle durch Poren mit Porendurchmessern von höchstens 50 nm, insbesondere durch Mikro- und/oder Mesoporen, gebildet werden.

Zudem ist es erfindungsgemäß von Vorteil, wenn 5 % bis 80 %, insbesondere 10 % bis 70 %, vorzugsweise 20 % bis 60 %, des Gesamtporenvolumens nach Gurvich der Aktivkohle, durch Poren mit Porendurchmessern im Bereich von 2 nm bis 50 nm, insbesondere durch Mesoporen, gebildet werden.

Gleichermaßen kann es erfindungsgemäß vorgesehen sein, dass 1 % bis 60 %, insbesondere 5 % bis 40 %, vorzugsweise 10 % bis 35 %, bevorzugt 15 % bis 33 %, des Gesamtporenvolumens nach Gurvich der Aktivkohle durch Poren mit Porendurchmessern von mehr als 2 nm, insbesondere durch Meso- und/oder Makroporen, gebildet werden.

Insbesondere kann die Aktivkohle ein durch Poren mit Porendurchmessern von höchstens 2 nm (d.h. $\leq 2$ nm) gebildetes Porenvolumen, insbesondere Mikroporenvolumen nach Carbon Black, im Bereich von 0,05 $cm^3/g$ bis 2,1 $cm^3/g$, insbesondere 0,15 $cm^3/g$ bis 1,8 $cm^3/g$, vorzugsweise 0,3 $cm^3/g$ bis 1,4 $cm^3/g$, besonders bevorzugt 0,5 $cm^3/g$ bis 1,2 $cm^3/g$, ganz besonders bevorzugt 0,6 $cm^3/g$ bis 1,1 $cm^3/g$, aufweisen. In diesem Zusammenhang können 15 % bis 98 %, insbesondere 25 % bis 95 %, vorzugsweise 35 % bis 90 %, des Gesamtporenvolumens der Aktivkohle durch Poren mit Porendurchmessern von höchstens 2 nm, insbesondere durch Mikroporen, gebildet werden.

Die Bestimmungsmethode nach Carbon Black ist dem Fachmann an sich bekannt, wobei zudem für weitergehende Einzelheiten zur Bestimmung der Porenoberfläche und des Porenvolumens nach Carbon Black beispielsweise verwiesen werden kann auf R. W. Magee, Evaluation of the External Surface Area of Carbon Black by Nitrogen Adsorption, Presented at the Meeting of the Rubber Division of the American Chem. Soc., October 1994, z. B. referiert in: Quantachrome Instruments, AUTOSORB-1, AS1 WinVersion 1.50, Operating Manual, OM, 05061, Quantachrome Instruments 2004, Florida, USA, Seiten 71 ff. Insbesondere kann die diesbezügliche Auswertung mittels *t-plot-method* erfolgen.

Ohne sich auf diese Theorie beschränken zu wollen, führt die Einstellung einer Porengrößenverteilung der erfindungsgemäß eingesetzten Aktivkohle im Anwendungsfall zu einer weiteren Verringerung der Verkeimung, insbesondere insofern, als aufgrund der speziellen Porengrößen Mikroorganismen nicht in das Porensystem der Aktivkohle eindringen können. Zudem wird das Adsorptionsverhalten der Aktivkohle auf Basis der eingestellten Porengrößenverteilung weiterführend verbessert.

Was die erfindungsgemäß eingesetzte Aktivkohle weiterhin anbelangt, so sollte diese eine spezifische BET-Oberfläche im Bereich von 600 $m^2/g$ bis 4.000 $m^2/g$, insbesondere 800 $m^2/g$ bis 3.500 $m^2/g$, vorzugsweise 1.000 $m^2/g$ bis 3.000 $m^2/g$, besonders bevorzugt 1.200 $m^2/g$ bis 2.750 $m^2/g$, ganz besonders bevorzugt 1.300 $m^2/g$ bis 2.500 $m^2/g$, weiter bevorzugt 1.400 $m^2/g$ bis 2.250 $m^2/g$, aufweisen.

Zudem kann die Aktivkohle eine durch Poren mit Porendurchmessern von höchstens 2 nm, insbesondere durch Mikroporen, gebildete Oberfläche im Bereich von 400 bis 3.500 $m^2/g$, insbesondere 500 bis 3.000 $m^2/g$, vorzugsweise 700 bis 2.500 $m^2/g$, bevorzugt 700 bis 2.000 $m^2/g$, aufweisen.

Gleichermaßen kann die Aktivkohle eine durch Poren mit Porendurchmessern im Bereich von 2 nm bis 50 nm, insbesondere durch Mesoporen, gebildete Oberfläche im Bereich von 200 bis 2.000 $m^2/g$, insbesondere 300 bis 1.900 $m^2/g$, vorzugsweise 400 bis 1.800 $m^2/g$, bevorzugt 500 bis 1.700 $m^2/g$, aufweisen.

Die Bestimmung der spezifischen Oberfläche gemäß BET ist dem Fachmann grundsätzlich als solche bekannt, so dass diesbezüglich keine weitergehenden Einzelheiten ausgeführt zu werden brauchen. Sämtliche BET-Oberflächenangaben beziehen sich auf die Bestimmung gemäß ASTM D6556-04. Im Rahmen der vorliegenden Erfindung wird zur Bestimmung der BET-Oberfläche - im Allgemeinen und sofern nicht ausdrücklich abweichend angegeben - die so genannte Multi-Point-BET-Bestimmungsmethode (MP-BET) in einem Partialdruckbereich $p/p_0$ von 0,05 bis 0,1 angewendet.

Für weitergehende Einzelheiten zu der Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur, und auf Winnacker-Küchler (3. Auflage), Band 7, Seiten 93 ff. sowie auf Z. Anal. Chem. 238, Seiten 187 bis 193 (1968), verwiesen werden.

Im Rahmen der vorliegenden Erfindung hat es sich insbesondere als vorteilhaft erwiesen, wenn eine mikro-/mesoporöse bzw. eine mesoporöse Aktivkohle eingesetzt wird. Denn auch auf dieser Basis kann einer weiterführenden Verkeimung entgegengewirkt werden, insbesondere im Hinblick auf die Gewährleistung eines verschlechterten Eindringvermögens von Mikroorganismen in das Porensystem der Aktivkohle. Zudem führt eine derartige Aktivkohle zu einem nochmals optimierten Adsorptionsverhalten, insbesondere auch im Hinblick auf die Gewährleistung eines entsprechenden Stofftransports im Hinblick auf das aufzureinigende Medium auch innerhalb der Aktivkohle. Somit ist die Verteilung der Poren, d.h. der Anteil an Mikro-/Meso- und Makroporen in Bezug auf das Gesamtporenvolumen der Aktivkohle von Bedeutung; insbesondere kann die Porosität durch die Auswahl der Ausgangsmaterialien sowie durch die Verfahrensbedingungen gezielt gesteuert bzw. eingestellt und somit maßgeschneidert werden.

Im Rahmen der vorliegenden Erfindung bezeichnet der Begriff "Mikroporen" solche Poren mit Porendurchmessern von weniger als 2 nm, wohingegen der Begriff "Mesoporen" solche Poren mit Porendurchmessern im Bereich von 2 nm (d.h. 2 nm einschließlich) bis 50 nm einschließlich bezeichnet und der Begriff "Makroporen" solche Poren mit Porendurchmessern von mehr als 50 nm (d.h. > 50 nm) bezeichnet.

Erfindungsgemäß kann die Aktivkohle einen mittleren Porendurchmesser im Bereich von 0,5 nm bis 55 nm, insbesondere 0,75 nm bis 50 nm, vorzugsweise 1 nm bis 45 nm, bevorzugt 1,5 nm bis 35 nm, besonders bevorzugt 1,75 nm bis 25 nm, ganz bevorzugt 2 nm bis 15 nm, weiter bevorzugt 2,5 nm bis 10 nm, noch weiter bevorzugt 2,75 nm bis 5 nm, aufweisen.

Der mittlere Porendurchmesser kann aus dem Quotienten des vierfachen Volumenwertes einer durch die Aktivkohle aufgenommenen bzw. adsorbierten Flüssigkeit (Adsorbat) bei vollständig gefüllten Poren ($V_{gesamt}$) einerseits und der BET-Oberfläche (BET) andererseits bestimmt werden (Porendurchmesser d = 4 · $V_{gesamt}$ / BET). Diesbezüglich kann auf die entsprechenden Ausführungen gemäß *R.W. Magee* (loc. cit.) verwiesen werden, insbesondere auf die Formeldarstellung (15) auf Seite 71 der in Rede stehenden Literaturstelle.

Weiterhin kann es erfindungsgemäß vorgesehen sein, dass die Aktivkohle eine Partikelgröße, insbesondere einen Teilchendurchmesser, im Bereich von 0,01 mm bis 2,5 mm, insbesondere 0,02 mm bis 2 mm, bevorzugt 0,05 mm bis 1,5 mm, vorzugsweise 0,1 mm bis 1,25 mm, besonders bevorzugt 0,15 mm bis 1 mm, ganz besonders bevorzugt 0,2 mm bis 0,8 mm, aufweist. In diesem Zusammenhang können insbesondere mindestens 70 Gew.-%, insbesondere mindestens 80 Gew.-%, vorzugsweise mindestens 85 Gew.-%, bevorzugt mindestens 90 Gew.-%, der Aktivkohlepartikel, besonders bevorzugt mindestens 95 Gew.-%, der Aktivkohlepartikel insbesondere Aktivkohleteilchen, Partikelgrößen, insbesondere Teilchendurchmesser, in den vorgenannten Bereichen aufweisen.

Zudem kann die Aktivkohle eine mittlere Partikelgröße (D50), insbesondere einen mittleren Teilchendurchmesser (D50), im Bereich von 0,1 mm bis 1,2 mm, insbesondere 0,15 mm bis 1 mm, vorzugsweise 0,2 mm bis 0,9 mm, bevorzugt 0,25 mm bis 0,8 mm, besonders bevorzugt 0,3 mm bis 0,6 mm, aufweisen.

Die entsprechenden Teilchengrößen bzw. -durchmesser können insbesondere auf Basis der Methode nach ASTM D2862-97/04 bestimmt werden. Zudem können die vorgenannten Größen mit Bestimmungsmethoden auf Basis einer Siebanalyse, auf Basis von Röntgenbeugung, Laserdiffraktometrie oder dergleichen bestimmt werden. Die jeweiligen Bestimmungsmethoden sind dem Fachmann als solche wohlbekannt, so dass es diesbezüglich keiner weiteren Ausführungen bedarf.

Die erfindungsgemäß eingesetzte Aktivkohle kann eine Rüttel- und Stampfdichte im Bereich von 150 g/l bis 1.800 g/l, insbesondere von 175 g/l bis 1.400 g/l, vorzugsweise 200 g/l bis 900 g/l, bevorzugt 250 g/l bis 800 g/l, besonders bevorzugt 300 g/l bis 750 g/l, ganz bevorzugt 350 g/l bis 700 g/l, aufweisen. Die Rüttel- bzw. Stampfdichte kann gemäß der DIN 53194 bestimmt werden.

Was die Aktivkohle weiterhin anbelangt, so kann diese eine Schüttdichte (*bulk density*) im Bereich von 200 g/l bis 1.100 g/l, insbesondere von 300 g/l bis 800 g/l, vorzugsweise 350 g/l bis 650 g/l, bevorzugt 400 g/l bis 595 g/l, aufweisen. Die Schüttdichte kann insbesondere gemäß der ASTM D527-93/00 bestimmt werden.

Zudem kann die Aktivkohle eine Abriebfestigkeit (*ball pan hardness*) bzw. Abriebhärte von mindestens 92 %, insbesondere mindestens 96 %, vorzugsweise mindestens 97 %, bevorzugt mindestens 98 %, besonders bevorzugt mindestens 98,5 %, weiter bevorzugt mindestens 99 %, noch weiter bevorzugt mindestens 99,5 %, aufweisen. Somit zeichnet sich die erfindungsgemäß eingesetzte Aktivkohle weiterhin durch hervorragende mechanische Eigenschaften aus, was sich auch in der hohen Abriebfestigkeit äußert. Die hohe mechanische Festigkeit der erfindungsgemäß eingesetzten Aktivkohle führt im Rahmen der Anwendung allenfalls zu geringen Abrieben, was insbesondere hinsichtlich der Einsatz- bzw. Standzeit sowie der Vermeidung von Schlammbildung durch Abrieb oder dergleichen insbesondere bei Filtersystemen zur Aufbereitung von Wasser von Vorteil ist. Die Abriebfestigkeit kann im Allgemeinen gemäß der ASTM D3802-05 bestimmt werden.

Die zuvor angeführte hohe mechanische Stabilität der erfindungsgemäß eingesetzten Aktivkohle äußert sich auch in einer hohen Druck- bzw. Berstfestigkeit (Gewichtsbelastbarkeit pro Aktivkohlekorn). In diesem Zusammenhang kann die Aktivkohle eine Druck- bzw. Berstfestigkeit (Gewichtsbelastbarkeit) pro Aktivkohlekorn, insbesondere pro Aktivkohlekügelchen, von mindestens 5 Newton, insbesondere mindestens 10 Newton, vorzugsweise mindestens 15 Newton, bevorzugt mindestens 20 Newton, aufweisen. Insbesondere kann die Aktivkohle eine Druck- und/oder Berstfestigkeit (Gewichtsbelastbarkeit) pro Aktivkohlekorn, insbesondere pro Aktivkohlekügelchen, im Bereich von 5 bis 50 Newton, insbesondere 10 bis 45 Newton, vorzugsweise 15 bis 40 Newton, aufweisen.

Die Bestimmung der Druck- bzw. Berstfestigkeit kann in einer dem Fachmann an sich bekannten Art und Weise erfolgen, insbesondere anhand der Bestimmung der Druck- bzw. Berstfestigkeit an einzelnen Partikeln bzw. Teilchen über Krafteinwirkung mittels eines Stempels bis zum Bersten des jeweiligen Partikels bzw. Teilchens.

Die erfindungsgemäß eingesetzte Aktivkohle als solche (d.h. die Aktivkohle im Ausgangszustand bzw. in Form des für den erfindungsgemäßen Zweck eingesetzten Ausgangsmaterials) sollte zudem über einen definierten Wassergehalt bzw. Feuchtigkeitsgehalt verfügen: So kann die Aktivkohle einen Wassergehalt und/oder Feuchtigkeitsgehalt im Bereich von 0,05 Gew.-% bis 3 Gew.-%, insbesondere 0,1 Gew.-% bis 2 Gew.-%, vorzugsweise 0,15 Gew.-% bis 1,5 Gew.-%, bevorzugt 0,175 Gew.-% bis 1 Gew.-%, besonders bevorzugt 0,2 Gew.-% bis 0,75 Gew.-%, bezogen auf die Aktivkohle, aufweisen. Die diesbezügliche Bestimmung erfolgt insbesondere gemäß der ASTM D2862-97/04.

Weiterhin kommt auch dem Benetzungsgrad (bestimmt unter definierten Parametern bzw. Gegebenheiten, wie nachfolgend angeführt) der erfindungsgemäß eingesetzten Aktivkohle, insbesondere dem Wasserbenetzungsgrad, hinsichtlich einer Verringerung des Bewuchses mit Mikroorganismen im Anwendungsfall der Aktivkohle eine große Bedeutung zu: So hat es sich erfindungsgemäß als vorteilhaft erwiesen, wenn die erfindungsgemäß eingesetzte Aktivkohle einen Benetzungsgrad, insbesondere Wasserbenetzungsgrad, von mindestens 35 %, insbesondere mindestens 40 %, vorzugsweise mindestens 45 %, bevorzugt mindestens 50 %, besonders bevorzugt mindestens 55 %, aufweist. Zudem kann die Aktivkohle einen Benetzungsgrad, insbesondere Wasserbenetzungsgrad, im Bereich von 35 % bis 90 %, insbesondere 40 % bis 85 %, vorzugsweise 45 % bis 80 %, bevorzugt 50 % bis 80 %, besonders bevorzugt 55 % bis 75 %, aufweisen. Für weitere Ausführungen zur Bestimmung des Benetzungsgrades bzw. des Wasserbenetzungsgrades kann auf das nachfolgend angeführte Ausführungsbeispiel 1 verwiesen werden.

Weiterhin sollte die Aktivkohle eine Iodzahl von mindestens 1.100 mg/g, insbesondere mindestens 1.200 mg/g, bevorzugt mindestens 1.300 mg/g, aufweisen. Insbesondere sollte die Aktivkohle eine Iodzahl im Bereich von 1.100 bis 2.000 mg/g, insbesondere 1.200 bis 1.800 mg/g, vorzugsweise 1.300 bis 1.600 mg/g, aufweisen. Die Iodzahl wird insbesondere gemäß der ASTM D4607-94/99 bestimmt.

Zudem kann die erfindungsgemäß eingesetzte Aktivkohle eine Butanadsorption von mindestens 25 %, insbesondere mindestens 30 %, vorzugsweise mindestens 40 %, aufweisen. Insbesondere kann die Aktivkohle eine Butanadsorption im Bereich von 25 bis 80 %, insbesondere 30 bis 70 %, vorzugsweise 35 bis 65 %, aufweisen. Die Butanadsorption kann insbesondere gemäß der ASTM D5742-95/00 bestimmt werden.

Was die bereitgestellte adsorptive Filtereinheit als solche anbelangt, so weist diese vorzugsweise eine Vielzahl an kugelförmigen Aktivkohlepartikeln auf, welche - wie nachfolgend noch angeführt - in Form einer losen Schüttung bzw. an einem Träger fixiert in der adsorptiven Filtereinheit nach der Erfindung vorliegen können.

Was die Filtereinheit darüber hinaus anbelangt, so kann es erfindungsgemäß vorgesehen sein, dass die Filtereinheit nach der Erfindung mindestens einen Träger aufweist. Dabei kann es erfindungsgemäß vorgesehen sein, dass das partikuläre Adsorptionsmaterial in Form der kugelförmigen Aktivkohle selbsttragend ist bzw. in Form einer insbesondere losen Schüttung vorliegt. In diesem Fall ist es erfindungsgemäß bevorzugt, wenn der Träger in Form eines Gehäuses bzw. einer Behausung insbesondere zur Aufnahme der Aktivkohle ausgebildet ist. Hierzu sollte das Gehäuse zumindest im Wesentlichen flüssigkeitsundurchlässig, insbesondere wasserundurchlässig, und/oder gasundurchlässig, insbesondere luftundurchlässig, ausgebildet sein und/oder über entsprechende Ein- und/oder Auslassvorrichtungen für das aufzureinigende fluide Medium verfügen.

Erfindungsgemäß kann es gemäß einer alternativen Ausführungsform aber auch vorgesehen sein, dass das partikuläre Adsorptionsmaterial in Form der kugelförmigen Aktivkohle auf dem Träger aufgebracht bzw. fixiert ist bzw. in Form eines Festbettes vorliegt. Diesbezüglich kann der Träger beispielsweise eine dreidimensionale Struktur aufweisen, beispielsweise in Form eines vorzugsweise offenporigen Schaumstoffs, besonders bevorzugt Polyurethanschaumstoffs. Gleichermaßen kann der Träger aber auch eine zweidimensionale bzw. flächige Struktur aufweisen. Insbesondere kann der Träger als vorzugsweise textiles Flächengebilde ausgebildet sein.

Für den Fall, dass die Aktivkohle auf dem Träger aufgebracht bzw. fixiert ist, sollte der Träger flüssigkeitsdurchlässig, insbesondere wasserdurchlässig, bzw. gasdurchlässig, insbesondere luftdurchlässig, ausgebildet sein, insbesondere um eine gute Durchströmung der Filtereinheit und ein optimales Inkontaktbringen der Aktivkohle mit dem aufzureinigenden Medium zu gewährleisten.

Insbesondere sollte der Träger bzw. das den Träger ausbildende Material insbesondere für den Fall, dass das Filterelement nach der Erfindung als Gas- bzw. Luftfilter eingesetzt wird, eine Gasdurchlässigkeit, insbesondere Luftdurchlässigkeit, von mindestens $10 \text{l} \cdot \text{m}^{-2} \cdot \text{s}^{-1}$, insbesondere mindestens $30 \text{l} \cdot \text{m}^{-2} \cdot \text{s}^{-1}$, vorzugsweise mindestens $50 \text{l} \cdot \text{m}^{-2} \cdot \text{s}^{-1}$, besonders bevorzugt mindestens $100 \text{l} \cdot \text{m}^{-2} \cdot \text{s}^{-1}$, ganz besonders bevorzugt mindestens $500 \text{l} \cdot \text{m}^{-2} \cdot \text{s}^{-1}$, bzw. eine Gasdurchlässigkeit, insbesondere Luftdurchlässigkeit, von bis zu $10.000 \text{l} \cdot \text{m}^{-2} \cdot \text{s}^{-1}$, insbesondere bis zu $20.000 \text{l} \cdot \text{m}^{-2} \cdot \text{s}^{-1}$, bei einem Strömungswiderstand von 127 Pa aufweisen. Im Fall von Filtereinheiten bzw. -systemen zur Aufreinigung von fluiden Medien (insbesondere in Form von Flüssigkeiten, wie Wasser) sollten korrespondierende Durchlässigkeiten für das fluide Medium, insbesondere für Wasser, vorliegen, um entsprechende (Wasser-)Durchsätze zu ermöglichen.

Weiterhin kann der Träger, insbesondere im Falle von Gas- bzw. Luftfiltern, als ein textiles Flächengebilde, vorzugsweise ein luftdurchlässiges Textilmaterial, bevorzugt ein Gewebe, Gewirke, Gestricke, Gelege oder Textilverbundstoff, insbesondere Vlies (Nonwoven), ausgebildet sein. In diesem Zusammenhang kann der Träger bzw. das Trägermaterial ein Flächengewicht von 5 bis 1.000 g/m$^2$, insbesondere 10 bis 500 g/m$^2$, bevorzugt 25 bis 450 g/m$^2$, aufweisen. Insbesondere kann der Träger ein natürliche Fasern und/oder synthetische Fasern (Chemiefasern) enthaltendes oder hieraus bestehendes textiles Flächengebilde sein. Insbesondere können dabei die natürlichen Fasern aus der Gruppe von Wollfasern und Baumwollfasern (CO) ausgewählt sein. Zudem können in diesem Zusammenhang die synthetischen Fasern ausgewählt sein aus der Gruppe von Polyestern (PES); Polyolefinen, insbesondere Polyethylen (PE) und/oder Polypropylen (PP); Polyvinylchloriden (CLF); Polyvinylidenchloriden (CLF); Acetaten (CA); Triacetaten (CTA); Polyacryl (PAN); Polyamiden (PA), insbesondere aromatischen, vorzugsweise flammfesten Polyamiden; Polyvinylalkoholen (PVAL); Polyurethanen; Polyvinylestern; (Meth-)-Acrylaten; Polymilchsäuren (PLA); Aktivkohle; sowie deren Mischungen.

Insbesondere kann es auch gemäß dieser erfindungsgemäßen Ausführungsform vorgesehen sein, dass das partikuläre Adsorptionsmaterial in Form der kugelförmigen Aktivkohle an bzw. auf dem Träger fixiert ist. Dies kann insbesondere mittels Verklebung, beispielsweise mittels eines Klebstoffs, oder in Folge von Eigenklebrigkeit oder Eigenadhäsion erfolgen.

Für den Fall, dass das Aktivkohlematerial an bzw. auf dem Träger fixiert ist, kann es erfindungsgemäß vorgesehen sein, dass die Filtereinheit nach der Erfindung zudem eine Behausung aufweist. Dabei ist die Behausung insbesondere für den Fall vorgesehen, wonach das partikuläre Adsorptionsmaterial in Form der kugelförmigen Aktivkohle an bzw. auf dem Träger aufgebracht bzw. fixiert ist bzw. in Form eines Festbettes unter Verwendung des Trägers eingesetzt wird. In diesem Zusammenhang fungiert die Behausung sozusagen als äußere Begrenzung der erfindungsgemäßen Filtereinheit sowie zur Aufnahme von Träger und Adsorptionsmaterial. In diesem Fall sollte die Behausung flüssigkeitsundurchlässig, insbesondere wasserundurchlässig, und/oder gasundurchlässig bzw. luftundurchlässig, ausgebildet sein. Im Allgemeinen kann die Behausung entsprechende Ein- und/oder Auslassvorrichtungen zur Auf- bzw. Abgabe des aufzureinigenden bzw. des aufgereinigten fluiden Mediums, wie Wasser oder Luft, aufweisen.

Aufgrund der hervorragenden Einsatz- bzw. Standzeiten bei gleichzeitig hoher Filtereffizienz eignet sich die adsorptive Filtereinheit für zahlreiche Verwendungen im Bereich der Gas- bzw. Flüssigkeitsaufbereitung. Insbesondere kann das adsorptive Filterelement aufgrund des gegenüber dem Stand der Technik nachhaltig verringerten biologischen Befalls auch für solche Anwendungen in Betracht gezogen werden, bei welchen eine hochreine Aufarbeitung bzw. Filterung eines zugrundeliegenden Mediums erforderlich ist, beispielsweise im Rahmen der Trinkwasseraufbereitung bzw. bei der Bereitstellung von Reinstwasser oder Reinraumatmosphären. Denn aufgrund des signifikant verringerten biologischen Befalls werden auch entsprechend weniger Keime in das aufzureinigende Medium abgegeben, so dass durch die Verwendung der Filtereinheit auch mikrobiologisch hochreine Medien im Rahmen der vorliegenden Erfindung bereitgestellt werden können, und dies auch nach großen Einsatz- bzw. Standzeiten der Filtereinheit.

Was die Filtereinheit zudem anbelangt, so kann diese in nichtbeschränkender Weise als Säulen- bzw. Kolonnenfilter insbesondere zur Aufreinigung fluider Medien, wie Wasser, ausgebildet sein. Gleichermaßen kann die erfindungsgemäße Filtereinheit als Luftfilter, beispielsweise für ABC-Schutzmasken, Dunstabzugshauben oder dergleichen, ausgebildet sein.

Im Folgenden wird die vorliegende Erfindung anhand von bevorzugten Ausführungsbeispielen bzw. Ausführungsformen darstellenden Zeichnungen bzw. Figurendarstellungen insbesondere auch im Vergleich zu entsprechenden nichterfindungsgemäßen (Vergleichs-)Ausführungen näher erläutert.

Im Zusammenhang mit der Erläuterung dieser bevorzugten Ausführungsbeispiele der vorliegenden Erfindung, welche jedoch in Bezug auf die vorliegende Erfindung keinesfalls beschränkend sind, werden auch weitergehende Vorteile, Eigenschaften, Aspekte und Merkmale der vorliegenden Erfindung aufgezeigt.

In den Figurendarstellungen zeigt:

Fig. 1     eine grafische Darstellung des Wasserdampfadsorptionsverhaltens bzw. die entsprechenden Wasserdampf- bzw. Adsorptionsisothermen einer erfindungsgemäß eingesetzten Aktivkohle (ausgefüllte Dreiecke) einerseits sowie einer Vergleichskohle (ausgefüllte Quadrate) andererseits;
bei der Fig. 1 zugrundeliegenden Aktivkohle handelt es sich um eine sphärische polymerbasierte Aktivkohle (PBSAC) mit einer BET-Oberfläche von 1.671 m$^2$/g und einem Gesamtporenvolumen, insbesondere Gesamtporenvolumen nach Gurvich, von 0,9071 cm$^3$/g bei einem Anteil an Poren mit einem Porendurchmesser von bis zu 50 nm von mindestens 60 %; zudem weist die erfindungsgemäß verwendete Aktivkohle einen Aschegehalt von 0,5 Gew.-%, einen Benetzungsgrad von 50 % sowie eine fraktale Dimension der offenen Porosität von etwa 2,88 auf; als Vergleichskohle wird eine Kokosnussschalen-basierte Splitterkohle eingesetzt, welche eine BET-Oberfläche von 1.087 m$^2$/g und ein Gesamtporenvolumen, insbesondere Gesamtporenvolumen nach Gurvich, von 0,6136 cm$^3$/g aufweist; darüber hinaus beträgt der Anteil an Poren mit einem Porenduchmesser von bis zu 50 nm deutlich weniger als 60 %, und die entsprechenden Vergleichskohlen weisen einen Aschegehalt von 1,6 Gew.-% sowie einen Benetzungsgrad von 30 % auf; zudem weist die Splitterkohle eine fraktale Dimension der offenen Porosität von etwa 2,95 auf;

Fig. 1 veranschaulicht, dass die Aktivkohle (PBSAC) insgesamt eine größere Menge bzw. ein größeres Volumen an Wasser adsorbiert und dass die erfindungsgemäß eingesetzte Aktivkohle im Vergleich zu der Splitterkohle weniger hydrophil bzw. im Vergleich zu der Splitterkohle hydrophob ist, da bei kleinen p/p$_0$-Werten für die erfindungsgemäß eingesetzte Aktivkohle im Vergleich zu der Splitterkohle geringere Mengen an Wasser aufgenommen werden; wie zuvor angeführt, weißt die erfindungsgemäß eingesetzte Aktivkohle signifikant verbesserte Eigenschaften hinsichtlich der Verminderung eines biologischen Befalls bzw. einer biologischen Kontamination bei der Verwendung als Filtermaterial für fluide Medien auf;

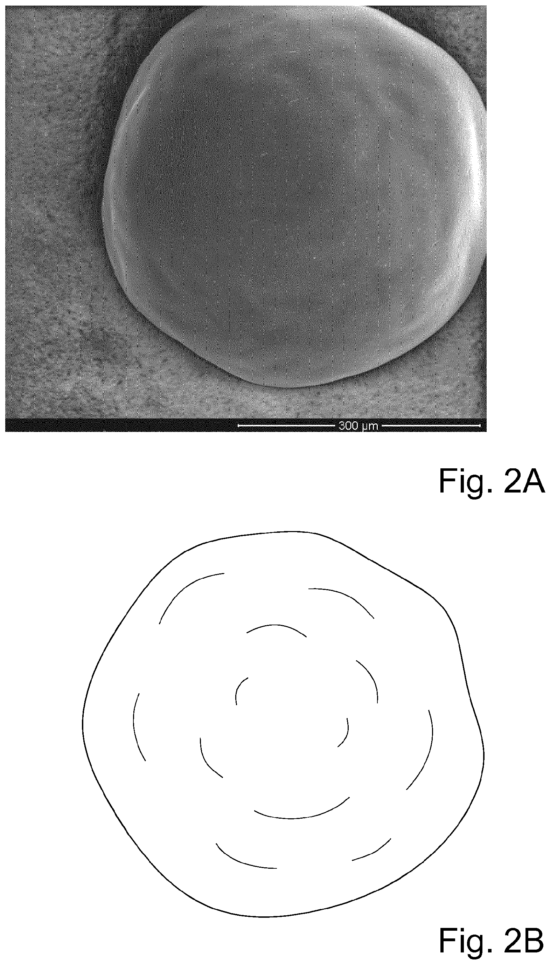

Fig. 2A   eine Elektronenrastermikroskopie-Aufnahme (REM-Aufnahme; Aufsicht auf ein Aktivkohleteilchen) einer erfindungsgemäß eingesetzten sphärischen Aktivkohle (PBSAC); die Abbildung zeigt die kugelförmige Formgebung mit der glatten Oberfläche der erfindungsgemäß eingesetzten Aktivkohle;

Fig. 2B   eine schematische Darstellung einer erfindungsgemäß eingesetzten Aktivkohle (Schemadarstellung zu Fig. 2A) zur Verdeutlichung der kugelförmigen Formgebung mit der glatten Oberfläche der erfindungsgemäß eingesetzten Aktivkohle;

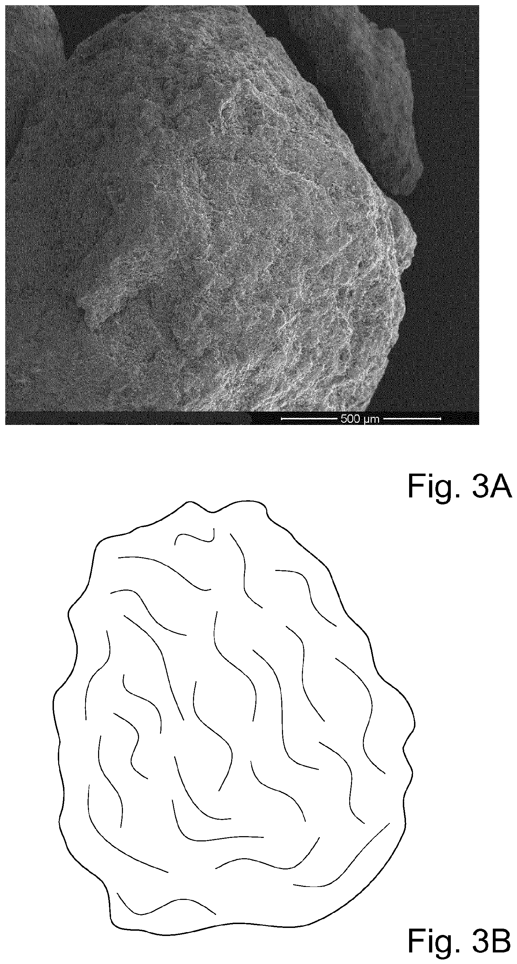

Fig. 3A   eine Elektronenrastermikroskopie-Aufnahme (REM-Aufnahme; Aufsicht auf ein Aktivkohleteilchen) einer nicht im Rahmen der vorliegenden Erfindung eingesetzten Aktivkohle (Splitterkohle auf Basis von Kokosnussschalen); die Abbildung zeigt die unregelmäßige bzw. splitterförmige Formgebung mit der rauen Oberfläche der entsprechenden Vergleichskohle;

Fig. 3B   eine schematische Darstellung einer nicht im Rahmen der vorliegenden Erfindung eingesetzten Aktivkohle (Schemadarstellung zu Fig. 3A) zur Verdeutlichung der unregelmäßigen, splitterförmigen Formgebung; die Darstellung verdeutlicht die unregelmäßige Formgebung mit der hohen Oberflächenrauigkeit der entsprechenden Vergleichskohle;

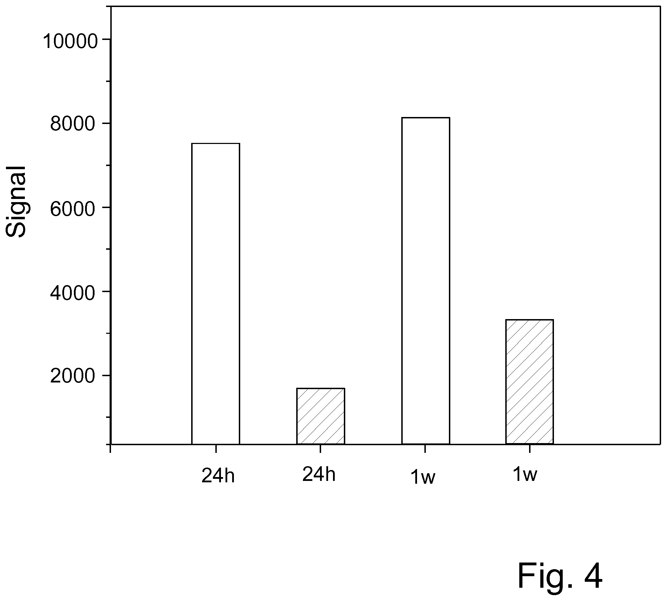

Fig. 4   eine grafische Darstellung in Form eines Balkendiagramms von Versuchsergebnissen gemäß Ausführungsbeispiel 2.) (vgl. nachfolgende Ausführungen zu Ausführungsbeispiel 2.)); die Balken veranschaulichen den Befall bzw. die Besiedlung der jeweiligen Aktivkohle nach 24 Stunden (24 h) bzw. nach einer Woche (1 w) für eine Vergleichskohle in Form einer Splitterkohle auf Basis von Kokosnussschalen (nichtausgefüllte Balken) einerseits und für eine erfindungsgemäß eingesetzte kugelförmige Aktivkohle (PBSAC) (schraffierte Balken) andererseits (vgl. auch Ausführungen zu Fig. 1 sowie Ausführungsbeispiel 2.)); die y-Achse zeigt die gemessenen Mikroorganismenbzw. Bakteriensignale, und die x-Achse gibt die jeweiligen Versuchsdauern an; die grafische Darstellung verdeutlicht den signifikant geringeren mikrobiologischen Befall bzw. die signifikant geringere Verkeimung der erfindungsgemäß eingesetzten Aktivkohlen gegenüber der entsprechenden Vergleichskohle.

Wie zuvor angeführt, ist es im Rahmen der vorliegenden Erfindung erstmals gelungen, ein Konzept bereitzustellen, auf dessen Basis durch die zweckgerichtete und gezielte Verwendung einer sehr speziellen Aktivkohle, wie zuvor definiert, für entsprechende Filtereinheiten- bzw. -elemente ein signifikant verringerter biologischer Befall bzw. eine geringere biologische Kontamination im Rahmen des Einsatzes der Filtereinheiten zu Filterzwecken resultiert.

Auch von daher eignet sich die bereitgestellte Filtereinheit für zahlreiche Verwendungen im Zusammenhang mit der Behandlung bzw. Aufreinigung eines fluiden Mediums:

Weiterer Gegenstand der vorliegenden Offenbarung sind somit auch die erfindungsgemäßen Verwendungen der Filtereinheit nach der Erfindung.

So kann die Filtereinheit zur Behandlung bzw. Aufreinigung eines fluiden Mediums, vorzugsweise Wasser, bevorzugt Abwasser oder Trinkwasser, insbesondere zur adsorptiven Entfernung von anorganisch oder organisch, insbesondere organisch-basierten Verunreinigungen aus dem fluiden Medium, verwendet werden.

In diesem Zusammenhang eignet sich die Filtereinheit insbesondere zur Verwendung im Rahmen der Aufreinigung bzw. Aufarbeitung von Abwasser. Zudem eignet sich die erfindungsgemäße Filtereinheit auch zur Bereitstellung bzw. Aufreinigung von Trinkwasser.

Gleichermaßen eignet sich die Filtereinheit auch für die Gasreinigung bzw. für die Gasaufbereitung.

Insbesondere eignet sich die Filtereinheit zur Verwendung im Rahmen der Entfernung von Schadstoffen, insbesondere gasförmigen Schadstoffen, oder von umweltschädlichen, gesundheitsschädlichen oder toxischen Substanzen oder Gasen.

Schließlich eignet sich die Filtereinheit auch zur Verwendung zur Aufbereitung und/oder Bereitstellung von Reinraumatmosphären, insbesondere für die Elektroindustrie, insbesondere für die Halbleiter- oder Chipherstellung.

Im Allgemeinen eignet sich die Filtereinheit für sämtliche Gasphasen- oder Flüssigphasenanwendungen, wobei in diesem Zusammenhang im Speziellen auch eine Adsorption von persistenten Verbindungen aus Oberflächenwasser möglich ist. Wie zuvor angeführt, eignet sich die Filtereinheit auch für die Trinkwasseraufbereitung, bei der Aktivkohlefilter im Allgemeinen vor einem gegebenenfalls durchzuführenden Desinfektionsschritt eingesetzt werden. Aufgrund des auch nach großen Einsatzdauern nur geringen biologischen Befalls des eingesetzten Adsorptionsmaterials resultiert eine deutlich geringere Kontamination des aufzureinigenden Mediums.

Auch von daher eignet sich die Filtereinheit zur Verwendung bei der Reinstwasseraufbereitung.

Wie zuvor angeführt, eignet sich die Filtereinheit auch zur Anwendung in der Gasphase und insbesondere zur Aufreinigung von (feuchten) Luftströmen, wobei ein allenfalls sehr geringer Bakterienbefall der zugrundeliegenden Aktivkohle auch zum Tragen kommt und von Vorteil ist, wenn feuchte Luft über den zugrundeliegenden Aktivkohlefilter gefiltert wird. Wie zuvor angeführt, kann ein diesbezüglicher Einsatz in Form von Luftfiltern, insbesondere für Reinräume, Atemschutzfilter oder aber in Form von Filtersystemen, beispielsweise für Dunstabzugshauben, in Betracht kommen.

Erfindungsgemäß wird somit insgesamt auf den Einsatz einer speziellen kugelförmigen Aktivkohle abgestellt, welche insbesondere in Form einer polymerbasierten sphärischen Aktivkohle vorliegt. Derartige Aktivkohlen weisen in entsprechenden Durchflussexperimenten im Vergleich zu herkömmlichen Splitterkohlen einen extrem geringen Befall von Mikroorganismen bzw. Bakterien auf. Der signifikant verringerte Befall an Bakterien in der wässrigen Phase kann dabei auch auf die sehr glatte Oberfläche bzw. die geringe Oberflächenrauigkeit der sphärischen Aktivkohle zurückgeführt werden, was den bakteriellen Bewuchs bzw. den mikrobiologischen Befall entsprechend verringert bzw. erschwert.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

**AUSFÜHRUNGSBEISPIELE:**

### 1. Bestimmung der Benetzung bzw. des Benetzungsgrades der erfindungsgemäß eingesetzten Aktivkohlen

Die Geschwindigkeit der Aufnahme von Wasser durch Adsorbentien, wie Aktivkohle, sowie die entsprechende Kapazität bis zur äußeren Benetzung spielen hinsichtlich der erfindungsgemäßen Konzeption der Bereitstellung von Filtereinheiten unter Einsatz - bzw. Anwendungsbedingungen mit geringem biologischem Befall bzw. geringerer biologischer Kontamination des zugrundeliegenden Adsorptionsmaterials eine große Rolle.

Mit der beschriebenen Methode kann sowohl die Wasseraufnahmegeschwindigkeit als auch diejenige Wasseraufnahmemenge, bis die Adsorbentien äußerlich benetzt werden, ermittelt werden. Das zugrundeliegende Untersuchungsprinzip ist dabei darin zu sehen, dass die zu untersuchenden Adsorptionsmaterialien jeweils in einem Erlenmeyerkolben unter stetigem Schütteln solange portionsweise mit Wasser versetzt werden, bis diese eine beginnende äußere Benetzung zeigen. Die äußerliche bzw. äußere Benetzung wird dadurch indiziert, dass befeuchtetes bzw. feuchtes Aktivkohlematerial an der Wand des Erlenmeyerkolbens nach erfolgtem Schütteln haften bleibt.

Im Speziellen erfolgt die Bestimmung des Benetzungsgrades derart, dass in einem Erlenmeyerkolben 10 g der zu untersuchenden Aktivkohle eingewogen und nachfolgend mit 2 g destilliertem Wasser unter Verwendung einer Tropfpipette versetzt werden. Der Erlenmeyerkolben wird nachfolgend verschlossen und geschüttelt, bis die vorgelegten Adsorbentien bzw. das Aktivkohlematerial oberflächlich trocken ist.

Nachfolgend wird die zur beginnenden äußeren Benetzung erforderliche Wassermenge in Schritten von 0,5 g zugegeben. Nach jeder Zugabe wird der Erlenmeyerkolben für etwa 3 Minuten geschüttelt. An der Wandung des Erlenmeyerkolbens gegebenenfalls haftendes bzw. klebendes Aktivkohlematerial wird dabei nicht entfernt bzw. abgekratzt. Die Zugabe an zur Benetzung der Aktivkohle erforderlichem Wasser wird beendet, wenn nach Schütteln des Erlenmeyerkolbens für einen Zeitraum von 3 Minuten entsprechende Aktivkohlepartikel an der Wandung des Kolbens haften bzw. kleben bleiben. Der Benetzungsgrad kann dabei anhand der folgenden Formel bestimmt werden:

$$\text{Benetzung [\%]} = \text{zugegebene Menge an } H_2O \text{ [g]} / 10 \text{ [g] (Menge an Aktivkohlematerial)} \cdot 100$$

In diesem Zusammenhang wird eine erfindungsgemäß eingesetzte Aktivkohle (PBSAC), wie unter Fig. 1 beschrieben, untersucht. Es resultiert ein entsprechender Benetzungsgrad von 50 %.

Als Vergleich wird zudem eine Splitterkohle auf Basis von Kokosnussschalen untersucht (vgl. Ausführungen zu Fig. 1). Für die entsprechende Splitterkohle wurde ein Benetzungsgrad von lediglich 30 % ermittelt.

## 2. Untersuchung des mikrobiologischen Befalls von Aktivkohlen

a) Die in Ausführungsbeispiel 1 angeführten Aktivkohlen, nämlich die erfindungsgemäß eingesetzte kugelförmige Aktivkohle (PBSAC) (Aktivkohle A) einerseits und die Kokosnussschalen-basierte Splitterkohle (Aktivkohle B) andererseits, werden hinsichtlich ihres biologischen Befalls bzw. ihrer Verkeimung unter Verwendung von Flusswasser anhand von Säulenexperimenten untersucht.

Dabei weist das eingesetzte Flusswasser in natürlicher Weise eine definierte Population an Mikroorganismen auf, welche zu einer Besiedlung bzw. Verkeimung der Aktivkohle führen kann.

Die zu untersuchenden Aktivkohlen werden jeweils mit einem Volumen von 40 ml in Kunststoffspritzenkörper (50 ml) gefüllt und über eine Mehrkanal-Schlauchpumpe mit dem Flusswasser beschickt. Für jede Untersuchungsreihe werden jeweils 4 Säulen eingesetzt. Die Probenentnahme erfolgt nach Ablauf von 24 Stunden sowie nach Ablauf einer Woche. Dabei wird mit einem Spatel jeweils eine Probe von der Oberfläche der Säule entnommen.

Die entsprechenden Proben werden unter Verwendung einer "*Confocal Laser Scanning Microscopy*" (CLSM) untersucht. Hierzu werden die jeweiligen Aktivkohleteilchen in einer Deckglaskammer mit einem Nukleinsäure-spezifischen Fluorochrom (*SybrGreen*) angefärbt. Die Deckglaskammern werden mit einem Deckglas verschlossen und mithilfe der CLSM untersucht.

Von jeder Probe werden zum jeweiligen Zeitpunkt 15 Partikel mikroskopiert. Dabei wird neben der Fluoreszenz der Mikroorganismen auch die Reflexion der Partikel als Hintergrundsignal mit aufgezeichnet. Die Signale der Mikroorganismen werden anschließend quantifiziert und gemittelt. Die Ergebnisse sind als sogenannte *Maximum Intensity Projection* (MIP) dargestellt. Die Ergebnisse werden grafisch in einem Balkendiagramm dargestellt (vgl. Fig. 4);

Figur 4 zeigt insgesamt die Quantifizierung der mittels *Confocal Laser Scanning Microscopy* (CLSM) ermittelten Kontaminationen der jeweiligen Aktivkohlen mit Mikroorganismen anhand der jeweiligen detektierten Messsignale.

Bei der untersuchten Splitterkohle B ist dabei ein deutlicher Befall mit Mikroorganismen bereits nach einer Untersuchungsdauer von 24 Stunden zu erkennen, während bei der erfindungsgemäß eingesetzte Aktivkohle A (PBSAC) nur ein geringer Befall mit Mikroorganismen zu erkennen ist. Dies gilt in entsprechender Weise für den Kontaminationsgrad und einer Versuchsdauer von einer Woche.

Im Ergebnis ist somit festzustellen, dass in Bezug auf die Splitterkohle gemäß Aktivkohle B bereits nach 24 Stunden ein deutlicher Befall bzw. ein Bewuchs mit Mikroorganismen vorliegt, welcher nach einer Woche nochmals verstärkt ist. Die entsprechende biologische Kontamination auf der erfindungsgemäß eingesetzten Aktivkohle A ist demgegenüber signifikant geringer. Auch nach einer Versuchsdauer von einer Woche liegt der mikrobielle Befall bei der erfindungsgemäß eingesetzten Aktivkohle A lediglich bei etwa 40 % des Befalls der Vergleichskohle B in Form der Splitterkohle.

b) Darüber hinaus werden weitere Aktivkohlen nach Maßgabe der Ausführungen in Abschnitt a) untersucht. Hierbei handelt es sich im Einzelnen um folgende polymerbasierte Aktivkohlen:

Bei der untersuchten Aktivkohle C handelt es sich um eine Aktivkohle, welche eine deutlich höhere Hydrophilie als die erfindungsgemäß eingesetzte Aktivkohle A aufweist, wobei in Bezug auf Aktivkohle C bei einem Partialdruck $p/p_0$ etwa 45 % der maximalen Wasserdampfsättigungsbeladung der Aktivkohle erreicht ist. Nach 24 Stunden wird bei Aktivkohle C ein Mikroorganismen- bzw. Bakteriensignal von 4.970 und nach einer Woche ein Mikroorganismen- bzw. Bakteriensignal von 6.814 ermittelt.

Weiterhin wird eine Aktivkohle (Aktivkohle D) untersucht, welche eine fraktale Dimension der offenen Porosität von 2,96 und somit eine relativ große Oberflächenrauigkeit aufweist. Für die untersuchte Aktivkohle D werden nach 24 Stunden 3.975 Signale und nach einer Woche 5.231 Signale ermittelt.

Weiterhin wird eine Aktivkohle (Aktivkohle E) untersucht, welche einen Aschegehalt von 1,35 Gew.-% aufweist. Für die untersuchte Aktivkohle E werden nach 24 Stunden 4.183 Signale und nach einer Woche 6.365 Signale ermittelt.

Die angeführten Untersuchungen belegen insgesamt, dass auf Basis der erfindungsgemäßen Kombination mit der Verwendung einer sehr speziellen Aktivkohle mit definierten Poren- und Oberflächeneigenschaften und mit spezieller Formgebung sowie auf Basis spezieller Ausgangsmaterialien im Rahmen der Anwendung des Filtermaterials für adsorptive Filteranwendungen hervorragende Eigenschaften in Bezug auf eine effektive Verminderung des biologischen Bewuchses bzw. der Verkeimung der auf diese Weise eingesetzte Aktivkohlen resultieren.

## Patentansprüche

1. Verwendung eines partikulären Adsorptionsmaterials in Form einer kugelförmigen Aktivkohle zur Verlängerung der Einsatz- und/oder Standzeit einer adsorptiven Filtereinheit, insbesondere zur Verbesserung und/oder Erhöhung der Beständigkeit und/oder Resistenz der adsorptiven Filtereinheit gegenüber biologischer Kontamination und/oder biologischem Befall,

wobei die Filtereinheit mit mindestens einem partikulären Adsorptionsmaterial in Form einer kugelförmigen Aktivkohle ausgerüstet und/oder ausgestattet wird, wobei die Aktivkohle ein Gesamtporenvolumen nach Gurvich im Bereich von 0,15 cm$^3$/g bis 3,95 cm$^3$/g, aufweist, wobei mindestens 60 % (d.h. $\geq 60$ %) des Gesamtporenvolumens nach Gurvich der Aktivkohle durch Poren mit Porendurchmessern von höchstens 50 nm (d.h. $\leq 50$ nm), insbesondere durch Mikro- und/oder Mesoporen, gebildet werden und

wobei die Aktivkohle eine Hydrophilie, bestimmt als statisch-volumetrisches Wasserdampfadsorptionsverhalten gemäß der DIN 66135-1 bei einer Temperatur von 25 °C, aufweist derart, dass bei einem Partialdruck $p/p_0$ von 0,6, wobei $p_0$ den Druck unter Standardbedingungen (1.013,25 hPa) darstellt, höchstens 30 % der maximalen Wasserdampfadsorptionskapazität der Aktivkohle erschöpft und/oder genutzt ist und/oder wobei bei einem Partialdruck $p/p_0$ von 0,6 höchstens 30 % der maximalen Wasserdampfsättigungsbeladung der Aktivkohle erreicht ist.

2. Verwendung nach Anspruch 1, wobei die Aktivkohle eine Hydrophilie, bestimmt als Wasserdampfadsorptionsverhalten gemäß der DIN 66135-1, aufweist derart, dass bei einem Partialdruck $p/p_0$ von 0,6 höchstens 25 %, insbesondere höchstens 20 %, vorzugsweise höchstens 10%, bevorzugt höchstens 5 %, der maximalen Wasserdampfadsorptionskapazität der Aktivkohle erschöpft und/oder genutzt ist und/oder wobei bei einem Partialdruck $p/p_0$ von 0,6 höchstens 25 %, insbesondere höchstens 20 %, vorzugsweise höchstens 10 %, bevorzugt höchstens 5 %, der maximalen Wasserdampfsättigungsbeladung der Aktivkohle erreicht ist.

3. Verwendung nach Anspruch 1 oder 2, wobei die Aktivkohle eine Hydrophilie, bestimmt als Wasserdampfadsorptionsverhalten gemäß der DIN 66135-1, aufweist derart, dass 0,1 % bis 30 %, insbesondere 0,5 % bis 25 %, vorzugsweise 1 % bis 20 %, bevorzugt 1,5 % bis 15 %, besonders bevorzugt 2 % bis 10 %, der maximalen Wasserdampfadsorptionskapazität der Aktivkohle bei einem Partialdruck $p/p_0$ von 0,6 erschöpft und/oder genutzt ist und/oder wobei 0,1 % bis 30 %, insbesondere 0,5 % bis 25%, vorzugsweise 1 % bis 20 %, bevorzugt 1,5 % bis 15 %, besonders bevorzugt 2 % bis 10%, der maximalen Wasserdampfsättigungsbeladung der Aktivkohle bei einem Partialdruck $p/p_0$ von 0,6 erreicht ist.

4. Verwendung nach einem der vorangehenden Ansprüche, wobei die Filtereinheit, insbesondere das partikuläre Adsorptionsmaterial in Form der kugelförmigen Aktivkohle, mit einem zu behandelnden und/oder aufzureinigendem fluidem Medium, vorzugsweise Wasser, bevorzugt Abwasser oder Trinkwasser, in Kontakt gebracht wird.

5. Verwendung nach einem der vorangehenden Ansprüche,
wobei die Filtereinheit mindestens einen Träger aufweist und/oder
wobei das partikuläre Adsorptionsmaterial in Form der kugelförmigen Aktivkohle selbsttragend ist und/oder in Form einer insbesondere losen Schüttung vorliegt, insbesondere wobei der Träger in Form eines Gehäuses insbesondere zur Aufnahme der Aktivkohle ausgebildet ist.

6. Verwendung nach einem der vorangehenden Ansprüche,
wobei das partikuläre Adsorptionsmaterial in Form der kugelförmigen Aktivkohle auf dem Träger aufgebracht ist und/oder in Form eines Festbettes vorliegt, insbesondere wobei der Träger eine dreidimensionale Struktur aufweist, insbesondere wobei der Träger als vorzugsweise offenporiger Schaumstoff ausgebildet ist oder aber wobei der Träger eine zweidimensionale und/oder flächige Struktur aufweist, insbesondere wobei der Träger als vorzugsweise textiles Flächengebilde ausgebildet ist.

7. Verwendung nach Anspruch 6,
wobei der Träger flüssigkeitsdurchlässig, insbesondere wasserdurchlässig, und/oder gasdurchlässig, insbesondere luftdurchlässig, ausgebildet ist, insbesondere wobei der Träger eine Gasdurchlässigkeit, insbesondere Luftdurchlässigkeit, von mindestens 10l•m$^{-2}$•s$^{-1}$, insbesondere mindestens 30l•m$^{-2}$•s$^{-1}$, vorzugsweise mindestens 50l•m$^{-2}$•s$^{-1}$, besonders bevorzugt mindestens 100l•m$^{-2}$•s$^{-1}$, ganz besonders bevorzugt mindestens 500l•m$^{-2}$•s$^{-1}$, und/oder eine Gasdurchlässigkeit, insbesondere Luftdurchlässigkeit, von bis zu 10.000l•m$^{-2}$•s$^{-1}$, insbesondere bis zu 20.000l•m$^{-2}$•s$^{-1}$, bei einem Strömungswiderstand von 127 Pa aufweist, und/oder
wobei der Träger als ein textiles Flächengebilde, vorzugsweise ein luftdurchlässiges Textilmaterial, bevorzugt ein Gewebe, Gewirke, Gestricke, Gelege oder Textilverbundstoff, insbesondere Vlies (Nonwoven), ausgebildet ist und/oder wobei der Träger ein Flächengewicht von 5 bis 1.000 g/m$^2$, insbesondere 10 bis 500 g/m$^2$, bevorzugt 25 bis 450 g/m$^2$, aufweist.

8. Verwendung nach Anspruch 6 oder 7,

wobei das partikuläre Adsorptionsmaterial in Form der kugelförmigen Aktivkohle an und/oder auf dem Träger fixiert ist, vorzugsweise mittels Verklebung, insbesondere mittels eines Klebstoffs, oder infolge von Eigenklebrigkeit oder von Eigenadhäsion, und/oder

wobei die Filtereinheit eine Behausung aufweist, insbesondere für den Fall, wonach das partikuläre Adsorptionsmaterial in Form der kugelförmigen Aktivkohle auf dem Träger aufgebracht ist und/oder in Form eines Festbettes vorliegt.

9. Verwendung nach einem der vorangehenden Ansprüche,
wobei die Aktivkohle eine Hydrophilie, bestimmt als Wasserdampfadsorptionsverhalten, aufweist derart, dass in einem Partialdruck $p/p_0$ von 0,6 die von der Aktivkohle adsorbierte Wasserdampfmenge ($H_2O$-Volumen) $V_{ads(H2O)}$, bezogen auf das Gewicht der Aktivkohle, im Bereich von 10 $cm^3$/g bis 200 $cm^3$/g, insbesondere 20 $cm^3$/g bis 175 $cm^3$/g, vorzugsweise 30 $cm^3$/g bis 150 $cm^3$/g, bevorzugt 40 $cm^3$/g bis 100 $cm^3$/g, besonders bevorzugt 50 $cm^3$/g bis 75 $cm^3$/g, beträgt.

10. Verwendung nach einem der vorangehenden Ansprüche,
wobei die Aktivkohle eine Hydrophilie, bestimmt als Wasserdampfadsorptionsverhalten, aufweist derart, dass 0,05 % bis 30 %, insbesondere 0,1 % bis 25 %, vorzugsweise 0,5 % bis 20 %, bevorzugt 1 % bis 15 %, besonders bevorzugt 1 % bis 10 %, der maximalen Wasserdampfadsorptionskapazität der Aktivkohle in einem Partialdruckbereich $p/p_0$ von 0,1 bis 0,6 erschöpft und/oder genutzt ist und/oder wobei 0,05 % bis 30 %, insbesondere 0,1 % bis 25 %, vorzugsweise 0,5 % bis 20 %, bevorzugt 1 % bis 15 %, besonders bevorzugt 1 % bis 10 %, der maximalen Wasserdampfsättigungsbeladung der Aktivkohle in einem Partialdruckbereich $p/p_0$ von 0,1 bis 0,6 erreicht ist.

11. Verwendung nach einem der vorangehenden Ansprüche,
wobei die Aktivkohle eine fraktale Dimension der offenen Porosität im Bereich von höchstens 2,9 (d.h. ≤ 2,9), insbesondere höchstens 2,89, vorzugsweise höchstens 2,85, bevorzugt höchstens 2,82, besonders bevorzugt höchstens 2,8, ganz besonders bevorzugt höchstens 2,75, weiter bevorzugt höchstens 2,7, aufweist und/oder wobei die Aktivkohle eine fraktale Dimension der offenen Porosität im Bereich von 2,2 bis 2,9, insbesondere 2,2 bis 2,89, vorzugsweise 2,25 bis 2,85, bevorzugt 2,3 bis 2,82, besonders bevorzugt 2,35 bis 2,8, ganz besonders bevorzugt 2,4 bis 2,75, weiter bevorzugt 2,45 bis 2,7, aufweist.

12. Verwendung nach einem der vorangehenden Ansprüche,
wobei die Aktivkohle erhältlich ist durch Carbonisierung und nachfolgende Aktivierung eines synthetischen und/oder nicht naturstoffbasierten Ausgangsmaterials, insbesondere auf Basis organischer Polymere, und/oder
wobei die Aktivkohle aus einem Ausgangsmaterial auf Basis organischer Polymere, insbesondere auf Basis sulfonierter organischer Polymere, vorzugsweise auf Basis von divinylbenzolvernetztem Polystyrol, bevorzugt auf Basis von Styrol/Divinylbenzol-Copolymeren, erhalten wird, insbesondere durch Carbonisierung und nachfolgende Aktivierung des Ausgangsmaterials, und/oder
wobei das Ausgangsmaterial ein insbesondere sulfoniertes und/oder Sulfonsäuregruppen enthaltendes Ionenaustauscherharz, insbesondere vom Geltyp, ist und/oder
wobei als Aktivkohle eine polymerbasierte sphärische Aktivkohle (PBSAC; *Polymer-based Spherical Activated Carbon*) eingesetzt wird und/oder wobei die Aktivkohle eine polymerbasierte sphärische Aktivkohle (PBSAC) ist.

13. Verwendung nach einem der vorangehenden Ansprüche,
wobei 60 % bis 90 %, insbesondere 65 % bis 85 %, vorzugsweise 70 % bis 80 %, des Gesamtporenvolumens nach Gurvich der Aktivkohle durch Poren mit Porendurchmessern von höchstens 50 nm gebildet werden und/oder
wobei 5 % bis 80 %, insbesondere 10 % bis 70 %, vorzugsweise 20 % bis 60 %, des Gesamtporenvolumens nach Gurvich der Aktivkohle durch Poren mit Porendurchmessern im Bereich von 2 nm bis 50 nm, gebildet werden und/oder
wobei 1 % bis 60 %, insbesondere 5 % bis 40 %, vorzugsweise 10 % bis 35 %, bevorzugt 15 % bis 33 %, des Gesamtporenvolumens nach Gurvich der Aktivkohle durch Poren mit Porendurchmessern von mehr als 2 nm, insbesondere durch Meso- und/oder Makroporen, gebildet werden.

14. Verwendung nach einem der vorangehenden Ansprüche,
wobei die Aktivkohle einen mittleren Porendurchmesser im Bereich von 0,5 nm bis 55 nm, insbesondere 0,75 nm bis 50 nm, vorzugsweise 1 nm bis 45 nm, bevorzugt 1,5 nm bis 35 nm, besonders bevorzugt 1,75 nm bis 25 nm, ganz bevorzugt 2 nm bis 15 nm, weiter bevorzugt 2,5 nm bis 10 nm, noch weiter bevorzugt 2,75 nm bis 5 nm, aufweist und/oder
wobei die Aktivkohle einen Teilchendurchmesser im Bereich von 0,01 mm bis 2,5 mm, insbesondere 0,02 mm bis 2 mm, bevorzugt 0,05 mm bis 1,5 mm, vorzugsweise 0,1 mm bis 1,25 mm, besonders bevorzugt 0,15 mm bis 1 mm, ganz besonders bevorzugt 0,2 mm bis 0,8 mm, aufweist, insbesondere wobei mindestens 70 Gew.-%, insbesondere mindestens 80 Gew.-%, vorzugsweise mindestens 85 Gew.-%, bevorzugt mindestens 90 Gew.-%, besonders bevorzugt mindestens 95 Gew.-%, der Aktivkohleteilchen Teilchendurchmesser in den vorgenannten Bereichen aufweisen.

15. Verwendung nach einem der vorangehenden Ansprüche,
wobei die Aktivkohle eine Abriebfestigkeit (*ball pan hardness*) und/oder Abriebhärte von mindestens 92 %, insbesondere mindestens 96 %, vorzugsweise mindestens 97 %, bevorzugt mindestens 98 %, besonders bevorzugt mindestens 98,5 %, weiter bevorzugt mindestens 99 %, noch weiter bevorzugt mindestens 99,5 %, aufweist und/oder wobei die Aktivkohle einen Wasserbenetzungsgrad im Bereich von 35 % bis 90 %, insbesondere 40 % bis 85 %, vorzugsweise 45 % bis 80 %, bevorzugt 50 % bis 80 %, besonders bevorzugt 55 % bis 75 %, aufweist.

**Claims**

1. Use of a particulate adsorption material in the form of a spherical activated carbon for extending the service life and/or service period of an adsorptive filter unit, in particular for improving and/or increasing the capability of the adsorptive filter unit to withstand and/or resist biological contamination and/or attack,
wherein the filter unit is provided and/or equipped with at least one particulate adsorption material in the form of a spherical activated carbon,
wherein the activated carbon has a Gurvich total pore volume in the range from 0.15 $cm^3$/g to 3.95 $cm^3$/g, wherein at least 60% (i.e. $\geq$ 60%) of the Gurvich total pore volume of the activated carbon is formed by pores with a pore diameter of at most 50 nm (i.e. $\leq$ 50 nm), in particular by micro- and/or mesopores, and
wherein the activated carbon has a hydrophilicity, determined as static-volumetric water vapour adsorption behaviour to DIN 66135-1 at a temperature of 25°C, such that, at a partial pressure $p/p_0$ of 0.6, wherein $p_0$ represents the pressure under standard conditions (1,013.25 hPa), at most 30% of the maximum water vapour adsorption capacity of the activated carbon is exhausted and/or used and/or wherein, at a partial pressure $p/p_0$ of 0.6, at most 30% of the maximum water vapour saturation load of the activated carbon is reached.

2. Use according to claim 1, wherein the activated carbon has a hydrophilicity, determined as water vapour adsorption behaviour to DIN 66135-1, such that, at a partial pressure $p/p_0$ of 0.6, at most 25%, in particular at most 20%, preferentially at most 10%, preferably at most 5%, of the maximum water vapour adsorption capacity of the activated carbon is exhausted and/or used and/or wherein, at a partial pressure $p/p_0$ of 0.6, at most 25%, in particular at most 20%, preferentially at most 10%, preferably at most 5%, of the maximum water vapour saturation load of the activated carbon is reached.

3. Use according to claim 1 or 2, wherein the activated carbon has a hydrophilicity, determined as water vapour adsorption behaviour to DIN 66135-1, such that 0.1% to 30%, in particular 0.5% to 25%, preferentially 1% to 20%, preferably 1.5% to 15%, particularly preferably 2% to 10%, of the maximum water vapour adsorption capacity of the activated carbon is exhausted and/or used at a partial pressure $p/p_0$ of 0.6 and/or wherein 0.1% to 30%, in particular 0.5% to 25%, preferentially 1% to 20%, preferably 1.5% to 15%, particularly preferably 2% to 10%, of the maximum water vapour saturation load of the activated carbon is reached at a partial pressure $p/p_0$ of 0.6.

4. Use according to one of the preceding claims, wherein the filter unit, in particular the particulate adsorption material in the form of the spherical activated carbon, is brought into contact with a fluid medium, preferentially water, preferably wastewater or drinking water, to be treated and/or purified.

5. Use according to one of the preceding claims,
wherein the filter unit has at least one carrier and/or
wherein the particulate adsorption material in the form of the spherical activated carbon is self-supporting and/or assumes the form of an in particular loose bed, in particular wherein the carrier takes the form of a housing in particular for accommodating the activated carbon.

6. Use according to one of the preceding claims,
wherein the particulate adsorption material is applied to the carrier in the form of the spherical activated carbon and/or assumes the form of a fixed bed, in particular wherein the carrier has a three-dimensional structure, in particular wherein the carrier takes the form of a preferentially open-pore foam or alternatively wherein the carrier has a two-dimensional and/or planar structure, in particular wherein the carrier takes the form of a preferentially textile fabric.

**7.** Use according to claim 6,
wherein the carrier is of liquid-permeable, in particular water-permeable, and/or gas-permeable, in particular air-permeable structure, in particular wherein the carrier has a gas permeability, in particular air permeability, of at least $10 l \cdot m^{-2} \cdot s^{-1}$, in particular at least $30 l \cdot m^{-2} \cdot s^{-1}$, preferentially at least $50 l \cdot m^{-2} \cdot s^{-1}$, particularly preferably at least $100 l \cdot m^{-2} \cdot s^{-1}$, very particularly preferably at least $500 l \cdot m^{-2} \cdot s^{-1}$, and/or a gas permeability, in particular air permeability, of up to $10,000 l \cdot m^{-2} \cdot s^{-1}$, in particular up to $20,000 l \cdot m^{-2} \cdot s^{-1}$, at a flow resistance of 127 Pa, and/or
wherein the carrier takes the form of a textile fabric, preferably an air-permeable textile material, preferably a woven fabric, a warp- or weft-knitted fabric, a laid fabric or a textile composite, in particular a nonwoven fabric, and/or
wherein the carrier has a basis weight of 5 to 1,000 $g/m^2$, in particular 10 to 500 $g/m^2$ and preferably 25 to 450 $g/m^2$.

**8.** Use according to claim 6 or 7,
wherein the particulate adsorption material in the form of the spherical activated carbon is fixed to and/or on the carrier, preferably by means of adhesive bonding, in particular by means of an adhesive, or as a result of intrinsic tackiness or intrinsic adhesion, and/or
wherein the filter unit has an enclosure, in particular in the case in which the particulate adsorption material is applied to the carrier in the form of the spherical activated carbon and/or assumes the form of a fixed bed.

**9.** Use according to one of the preceding claims,
wherein the activated carbon has a hydrophilicity, determined as water vapour adsorption behaviour, such that, under a partial pressure $p/p_0$ of 0.6, the quantity of water vapour absorbed by activated carbon ($H_2O$ volume) $V_{ads(H2O)}$, based on the weight of activated carbon, is in the range from 10 $cm^3/g$ to 200 $cm^3/g$, in particular 20 $cm^3/g$ to 175 $cm^3/g$, preferentially 30 $cm^3/g$ to 150 $cm^3/g$, preferably 40 $cm^3/g$ to 100 $cm^3/g$, particularly preferably 50 $cm^3/g$ to 75 $cm^3/g$.

**10.** Use according to one of the preceding claims,
wherein the activated carbon has a hydrophilicity, determined as water vapour adsorption behaviour, such that 0.05% to 30%, in particular 0.1% to 25%, preferentially 0.5% to 20%, preferably 1% to 15%, particularly preferably 1% to 10%, of the maximum water vapour adsorption capacity of the activated carbon is exhausted and/or used in a partial pressure range $p/p_0$ of 0.1 to 0.6 and/or wherein 0.05% to 30%, in particular 0.1% to 25%, preferentially 0.5% to 20%, preferably 1% to 15%, particularly preferably 1% to 10%, of the maximum water vapour saturation load of the activated carbon is reached in a partial pressure range $p/p_0$ of 0.1 to 0.6.

**11.** Use according to one of the preceding claims,
wherein the activated carbon has a fractal dimension of the open porosity in the range of at most 2.9 (i.e. $\leq$ 2.9), in particular at most 2.89, preferentially at most 2.85, preferably at most 2.82, particularly preferably at most 2.8, very particularly preferably at most 2.75, more preferably at most 2.7 and/or wherein the activated carbon has a fractal dimension of the open porosity in the range from 2.2 to 2.9, in particular 2.2 to 2.89, preferentially 2.25 to 2.85, preferably 2.3 to 2.82, particularly preferably 2.35 to 2.8, very particularly preferably 2.4 to 2.75, more preferably 2.45 to 2.7.

**12.** Use according to one of the preceding claims,
wherein the activated carbon is obtainable by carbonising and subsequently activating a starting material which is synthetic and/or not based on a natural material, in particular is based on organic polymers, and/or
wherein the activated carbon from a starting material based on organic polymers, in particular based on sulfonated organic polymers, preferentially based on divinylbenzene-crosslinked polystyrene, preferably based on styrene/divinylbenzene copolymers, in particular by carbonising and subsequently activating the starting material, and/or
wherein the starting material is an in particular sulfonated and/or sulfonic acid group-containing ion exchange resin, in particular of the gel type, and/or
wherein a *polymer-based spherical activated carbon* (PBSAC) is used as the activated carbon and/or wherein the activated carbon is a polymer-based spherical activated carbon (PBSAC).

**13.** Use according to one of the preceding claims,
wherein 60% to 90%, in particular 65% to 85%, preferentially 70% to 80%, of the Gurvich total pore volume of the activated carbon is formed by pores with a pore diameter of at most 50 nm and/or
wherein 5% to 80%, in particular 10% to 70%, preferentially 20% to 60%, of the Gurvich total pore volume of the activated carbon is formed by pores with a pore diameter in the range from 2 nm to 50 nm and/or

wherein 1% to 60%, in particular 5% to 40%, preferentially 10% to 35%, preferably 15% to 33%, of the Gurvich total pore volume of the activated carbon is formed by pores with a pore diameter of greater than 2 nm, in particular by meso- and/or macropores.

14. Use according to one of the preceding claims,
wherein the activated carbon has an average pore diameter in the range from 0.5 nm to 55 nm, in particular 0.75 nm to 50 nm, preferentially 1 nm to 45 nm, preferably 1.5 nm to 35 nm, particularly preferably 1.75 nm to 25 nm, very preferably 2 nm to 15 nm, more preferably 2.5 nm to 10 nm, still more preferably 2.75 nm to 5 nm, and/or wherein the activated carbon has a particle diameter in the range from 0.01 mm to 2.5 mm, in particular 0.02 mm to 2 mm, preferably 0.05 mm to 1.5 mm, preferentially 0.1 mm to 1.25 mm, particularly preferably 0.15 mm to 1 mm, very particularly preferably 0.2 mm to 0.8 mm, in particular wherein at least 70 wt.%, in particular at least 80 wt.%, preferentially at least 85 wt.%, preferably at least 90 wt.%, particularly preferably at least 95 wt.%, of the activated carbon particles have a particle diameter in the above-stated ranges.

15. Use according to one of the preceding claims,
wherein the activated carbon has an abrasion resistance (*ball pan hardness*) and/or abrasion hardness of at least 92%, in particular at least 96%, preferentially at least 97%, preferably at least 98%, particularly preferably at least 98.5%, more preferably at least 99%, still more preferably at least 99.5%, and/or wherein the activated carbon has a degree of water wetting in the range from 35% to 90%, in particular 40% to 85%, preferentially 45% to 80%, preferably 50% to 80%, particularly preferably 55% to 75%.

## Revendications

1. Utilisation d'un matériau d'adsorption particulaire sous la forme d'un charbon actif sphérique destiné à prolonger le temps d'utilisation et/ou la durée de vie d'une cartouche filtrante adsorbante, notamment destinée à améliorer et/au à augmenter la résistance et/ou la durabilité de la cartouche filtrante adsorbante par rapport à la contamination biologique et/ou l'infestation biologique,
la cartouche filtrante étant pourvue et/ou équipée d'au moins un matériau d'adsorption particulaire sous la forme d'un charbon actif sphérique,
le charbon actif présentant un volume total de pores selon Gurvich dans la plage comprise entre 0,15 cm$^3$/g et 3,95 cm$^3$/g, au moins 60 % (c'est-à-dire ≥ 60 %) du volume total de pores selon Gurvich du charbon actif sont formés à partir de pores ayant des diamètres inférieurs ou égaux à 50 nm (c'est-à-dire ≤ 50 nm), notamment à partir de micropores et/ou mesopores, et
le charbon actif ayant une hydrophilie, déterminée en tant que comportement d'adsorption de vapeur d'eau conformément à la norme DIN 66135-1 à une température de 25 °C, de manière à ce que, à une pression partielle $p/p_0$ de 0,6, $p_0$ représente la pression dans des conditions normales (1 013,25 hPa), 30 % au plus de la capacité d'adsorption de vapeur d'eau du charbon actif soient épuisés et/ou utilisés, et/ou à une pression partielle $p/p_0$ de 0,6, 30 % au plus de la concentration de saturation de vapeur d'eau du charbon actif soient obtenus.

2. Utilisation selon la revendication 1, le charbon actif ayant une hydrophilie, déterminée en tant que comportement d'adsorption de vapeur d'eau conformément à la norme DIN 66135-1, de manière à ce que, à une pression partielle $p/p_0$ de 0,6, 25 % au plus, en particulier 20 % au plus, de préférence 10 % au plus, préférentiellement 5 % au plus, de la capacité d'adsorption de vapeur d'eau du charbon actif soient épuisés et/ou utilisés et/ou à une pression partielle $p/p_0$ de 0,6, 25 % au plus, en particulier 20 % au plus, de préférence 10 % au plus, préférentiellement 5 % au plus de la concentration de saturation de vapeur d'eau du charbon actif soient obtenus.

3. Utilisation selon la revendication 1 ou 2, le charbon actif ayant une hydrophilie, déterminée en tant que comportement d'adsorption de vapeur d'eau conformément à la norme DIN 66135-1, de manière à ce qu'entre 0,1 % et 30 %, en particulier entre 0,5 % et 25 %, de préférence entre 1 % et 20 %, préférentiellement entre 1,5 % et 15 %, de préférence encore entre 2 % et 10 % de la capacité d'adsorption de vapeur d'eau maximale du charbon actif à une pression partielle $p/p_0$ de 0,6, soient épuisés et/ou utilisés, entre 0,1 % et 30 %, en particulier entre 0,5 % et 25 %, de préférence entre 1 % et 20 %, préférentiellement entre 1,5 % et 15 %, de préférence encore entre 2 % et 10 % de la concentration de saturation de vapeur d'eau du charbon actif soient obtenus à une pression partielle $p/p_0$ de 0,6.

4. Utilisation selon l'une quelconque des revendications précédentes, la cartouche filtrante, en particulier le matériau d'adsorption particulaire sous la forme du charbon actif sphérique, étant mis en contact avec un milieu fluide à traiter et/ou à purifier, de préférence de l'eau, préférentiellement de l'eau résiduelle ou de l'eau potable.

**5.** Utilisation selon l'une quelconque des revendications précédentes,
la cartouche filtrante présentant au moins un support et/ou
le matériau d'adsorption particulaire sous la forme du charbon actif sphérique est autoportant et/ou se présente sous la forme d'une charge notamment en vrac, en particulier le support étant réalisé sous la forme d'un boîtier notamment destiné à loger le charbon actif.

**6.** Utilisation selon l'une quelconque des revendications précédentes,
le matériau d'adsorption particulaire étant appliqué sous la forme du charbon actif sphérique au support et/ou se présentant sans la forme d'un lit fixe, en particulier le support comportant une structure tridimensionnelle, en particulier le support étant réalisé sous la forme d'une mousse à cellules ouvertes ou bien le support comportant une structure bidimensionnelle et/ou plate, en particulier le support étant réalisé de préférence sous la forme de surface textile.

**7.** Utilisation selon la revendication 6,
le support étant perméable aux liquides, en particulier perméable à l'eau, et/ou perméable au gaz, en particulier perméable à l'air, en particulier le support présentant une perméabilité au gaz, en particulier une perméabilité à l'air, d'au moins 10 l • m$^{-2}$ • s$^{-1}$, en particulier d'au moins 30 l • m$^{-2}$ • s$^{-1}$, de préférence d'au moins 50 l • m$^{-2}$ • s$^{-1}$, de préférence encore d'au moins 100 l • m$^{-2}$ • s$^{-1}$, mieux encore d'au moins 500 l • m$^{-2}$ • s$^{-1}$, et/ou une perméabilité au gaz, en particulier une perméabilité à l'air jusqu'à 10.000 l • m$^{-2}$ • s$^{-1}$, en particulier jusqu'à 20.000 l • m$^{-2}$ • s$^{-1}$, à une résistance d'écoulement de 127 Pa, et/ou
le support étant réalisé sous la forme d'une surface textile, de préférence une matière textile perméable à l'air, de préférence un tissu, un tricot, un tricot à mailles, un textile non tissé, en particulier un non tissé (nonwoven), et/ou le support présentant un poids surfacique de 5 à 1 000 g/m$^2$, en particulier de 10 à 500 g/m$^2$, de préférence de 25 à 450 g/m$^2$.

**8.** Utilisation selon la revendication 6 ou 7,
le matériau d'adsorption particulaire sous la forme du charbon actif sphérique étant fixé sur et/ou au support, de préférence au moyen de collage, en particulier au moyen d'une colle, ou grâce à l'adhérence ou l'adhésion propre, et/ou
la cartouche filtrante comportant un logement, en particulier au cas où le matériau d'adsorption particulaire sous la forme du charbon actif sphérique soit appliqué au support et/ou se présentant sous la forme d'un lit fixe.

**9.** Utilisation selon l'une quelconque des revendications précédentes,
le charbon actif ayant une hydrophilie, déterminée comme comportant d'adsorption de vapeur d'eau de manière à ce qu'à une pression partielle $p/p_0$ de 0,6, la quantité de vapeur d'eau adsorbée par le charbon actif (volume de H$_2$O) V$_{ads(H2O)}$, par rapport au poids du charbon actif, se situe dans la plage comprise entre 10 cm$^3$/g et 200 cm$^3$/g, en particulier entre 20 cm$^3$/g et 175 cm$^3$/g, de préférence entre 30 cm$^3$/g et 150 cm$^3$/g, préférentiellement entre 40 cm$^3$/g et 100 cm$^3$/g, de préférence encore entre 50 cm$^3$/g et 75 cm$^3$/g.

**10.** Utilisation selon l'une quelconque des revendications précédentes,
le charbon actif ayant une hydrophilie, déterminée en tant que comportement d'adsorption de vapeur d'eau, de manière à ce qu'entre 0,05 % et 30 %, en particulier entre 0,1 % et 25 %, de préférence entre 0,5 % et 20 %, préférentiellement entre 1 % et 15 %, de préférence encore entre 1 % et 10 % de la capacité d'adsorption de vapeur d'eau maximale du charbon actif dans une plage de pression partielle $p/p_0$ comprise entre 0,1 et 0,6, soient épuisés et/ou utilisés, et/ou entre 0,05 % et 30 %, en particulier entre 0,1 % et 25 %, de préférence entre 0,5 % et 20 %, préférentiellement entre 1 % et 15 %, de préférence encore entre 1 % et 10 % de la concentration de saturation de vapeur d'eau du charbon actif soient obtenus dans une plage de pression partielle $p/p_0$ comprise entre 0,1 et 0,6.

**11.** Utilisation selon l'une quelconque des revendications précédentes,
le charbon actif présentant une dimension fractale de la porosité ouverte dans la plage inférieure ou égale à 2,9 (c'est-à-dire ≤ 2,9), en particulier inférieure ou égale à 2,89, de préférence inférieure ou égale à 2,85, préférentiellement inférieure ou égale à 2,82, de préférence encore inférieure ou égale à 2,8, mieux encore inférieure ou égale à 2,75, idéalement inférieure ou égale à 2,7, et/ou le charbon actif présentant une dimension fractale de la porosité ouverte dans la plage comprise entre 2,2 et 2,9, en particulier entre 2,2 et 2,89, de préférence entre 2,25 et 2,85, préférentiellement entre 2,3 et 2,82, de préférence encore entre 2,35 et 2,8, mieux encore entre 2,4 et 2,75, idéalement entre 2,45 et 2,7.

**12.** Utilisation selon l'une quelconque des revendications précédentes,

le charbon actif pouvant être obtenu par carbonatation et activation subséquente d'un produit de départ synthétique et/ou qui n'est pas à base de matériau naturel, en particulier à base de polymère organique, et/ou

le charbon actif étant obtenu à partir d'un produit de départ à base de polymère organique, en particulier à base de polymère organique sulfoné, de préférence à base de polystyrol réticulé par du divinylbenzène, de préférence à base de copolymères styrol/divinylbenzène, en particulier par carbonatation et activation subséquente du produit de départ, et/ou

le produit de départ étant une résine échangeuse d'ions contenant un groupe notamment sulfoné et/ou des groupes acide sulfonique, et/ou

un charbon actif sphérique à base de polymère (PBSAC ; *Polymer-based Spherical Activated Carbon*) étant utilisé comme charbon actif et/ou le charbon actif étant un charbon actif sphérique à base de polymère (PBSAC).

13. Utilisation selon l'une quelconque des revendications précédentes,

entre 60 % et 90 %, en particulier entre 65 % et 85 %, préférentiellement entre 70 % et 80 % du volume total des pores selon Gurvich du charbon actif étant formés par des pores ayant des diamètres inférieurs ou égaux à 50 nm et/ou

entre 5 % et 80 %, en particulier entre 10 % et 70 %, préférentiellement entre 20 % et 60 % du volume total des pores selon Gurvich du charbon actif étant formés par des pores ayant des diamètres compris entre 2 nm et 50 nm et/ou

entre 1 % et 60 %, en particulier entre 5 % et 40 %, préférentiellement entre 10 % et 35 %, de préférence entre 15 % et 33 % du volume total des pores selon Gurvich du charbon actif étant formés par des pores ayant des diamètres supérieurs à 2 nm, en particulier par des mesopores et/ou des macropores.

14. Utilisation selon l'une quelconque des revendications précédentes,

le charbon actif présentant un diamètre moyen de pore dans la plage comprise entre 0,5 nm et 55 nm, en particulier entre 0,75 nm et 50 nm, préférentiellement entre 1 nm et 45 nm, de préférence entre 1,5 nm et 35 nm, de préférence encore entre 1,75 nm et 25 nm, mieux encore entre 2 nm et 15 nm, plus préférentiellement entre 2,5 nm et 10 nm, idéalement entre 2,75 nm et 5 nm, et/ou

le charbon actif présentant un diamètre particulaire dans la plage comprise entre 0,01 mm et 2,5 mm, en particulier entre 0,02 mm et 2 mm, de préférence entre 0,05 mm et 1,5 mm, préférentiellement entre 0,1 mm et 1,25 mm, de préférence encore entre 0,15 mm et 1 mm, idéalement entre 0,2 mm et 0,8 mm, en particulier au moins 70 % en poids, en particulier au moins 80 % en poids, de préférence au moins 85 % en poids, préférentiellement au moins 90 % en poids, de préférence encore au moins 95 % en poids des particules de charbon actif présentant le diamètre particulaire dans les zones susmentionnées.

15. Utilisation selon l'une quelconque des revendications précédentes,

le charbon actif présentant une dureté (*bail pan hardness*) et/ou une dureté à l'abrasion d'au moins 92 %, en particulier d'au moins 96 %, de préférence d'au moins 97 %, préférentiellement d'au moins 98 %, de préférence encore d'au moins 98,5 %, plus préférentiellement d'au moins 99 %, mieux encore d'au moins 99,5 %, et/ou

le charbon actif présentant un coefficient de mouillage de l'eau dans la plage comprise entre 35 % et 90 %, en particulier entre 40 % et 85 %, préférentiellement entre 45 % et 80 %, de préférence entre 50 % et 80 %, mieux encore entre 55 % et 75 %.

Fig. 1

Fig. 2A

Fig. 2B

Fig. 3A

Fig. 3B

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3624975 C2
- DE 1642396 A1
- WO 2007092914 A1
- DE 3813564 A1
- EP 0338551 A2
- DE 202013003676 U1
- DE 10254241 A1
- WO 2004046033 A1
- EP 1562855 B1
- US 2006148645 A1
- DE 4328219 A1
- DE 4304026 A1
- DE 19600237 A1
- EP 1918022 A1
- US 7737038 B2

**In der Beschreibung aufgeführte Nicht-Patentliteratur**

- **P. PFEIFFER ; Y.J. WU ; M.W. COLE ; J. KRIM.** *Phys. Rev. Lett.,* 1989, vol. 62, 1997
- **A.V. NEIMARK.** *Ads. Sci. Tech.,* 1991, vol. 7, 210
- **P. PFEIFFER ; J. KENNTER ; M.W. COLE.** Fundamentals of Adsorption. Engineering Foundation, 1991, 689
- **L. GURVICH.** *J. Phys. Chem. Soc. Russ.,* 1915, vol. 47, 805
- Characterization of Porous Solids and Powders: Surface Area Pore Size and Density. **S. LOWELL et al.** Article Technology Series. Kluwer Academic Publishers, 111 ff
- **R. W. MAGEE.** Evaluation of the External Surface Area of Carbon Black by Nitrogen Adsorption. *Presented at the Meeting of the Rubber Division of the American Chem. Soc.,* Oktober 1994
- Quantachrome Instruments, AUTOSORB-1. AS1 WinVersion 1.50, Operating Manual, OM, 05061, Quantachrome Instruments 2004. 71 ff
- BET-Methode. Römpp Chemielexikon. Georg Thieme Verlag
- Literatur, und auf Winnacker-Küchler. vol. 7, 93 ff
- *Z. Anal. Chem.,* 1968, vol. 238, 187-193